(19) Europäisches Patentamt / European Patent Office / Office européen des brevets

(11) **EP 2 504 662 B1**

(12) **EUROPEAN PATENT SPECIFICATION**

(45) Date of publication and mention
of the grant of the patent:
**21.11.2018 Bulletin 2018/47**

(21) Application number: **09851744.4**

(22) Date of filing: **24.11.2009**

(51) Int Cl.:
***G01C 17/28*** *(2006.01)*    ***G01C 21/08*** *(2006.01)*
***G01C 21/20*** *(2006.01)*    *G01C 21/00* *(2006.01)*

(86) International application number:
**PCT/US2009/006293**

(87) International publication number:
**WO 2011/065931 (03.06.2011 Gazette 2011/22)**

(54) **Positioning a device relative to a magnetic signal source**

Ortung eines Geräts in Bezug zu einer magnetischen Signalquelle

Localisation d'un appareil par rapport à une source de signal magnétique

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**03.10.2012 Bulletin 2012/40**

(73) Proprietor: **Nokia Technologies Oy
02610 Espoo (FI)**

(72) Inventors:
• **KAMPPI, Paul Mikael
FI-00210 Helsinki (FI)**

• **MUTANEN, Risto Petteri
FI-01260 Vantaa (FI)**
• **RAUTIAINEN, Terhi
FI-01520 Vantaa (FI)**

(74) Representative: **Cohausz & Florack
Patent- & Rechtsanwälte
Partnerschaftsgesellschaft mbB
Postfach 10 18 30
40009 Düsseldorf (DE)**

(56) References cited:
**US-A- 5 015 994    US-A- 5 646 525
US-A- 5 833 608    US-A- 6 122 486
US-B1- 6 686 881    US-B1- 7 298 289**

## Description

FIELD

This invention relates to positioning.

BACKGROUND

Positioning services that allow positioning (localizing) of a device (and thus also of the user that is carrying the device) nowadays are generally widely available. For outdoor positioning, Global Navigation Satellite Systems (GNSSs) already provide satisfactory results, in particular when enhanced with GNSS Augmentation. In obstructed outdoor scenarios or certain indoor scenarios, the satellites' signals may however be heavily attenuated, calling for additional/alternative positioning methods.

US 6 686 881 B1 describes an identification and tracking system for a mobile object using magnetic fields generated by separate magnetic field sources. The respective magnetic fields are detected at the object and used for determining its position relative to the magnetic field sources.

SUMMARY OF SOME EMBODIMENTS OF THE INVENTION

In order to generally improve positioning accuracy, multiple positioning techniques may be combined, both in outdoor and indoor environments. For instance, in open outdoor scenarios GNSS based positioning techniques may be applied, and in large open indoor scenarios, such as in a lobby or an exhibition hall, angle-based positioning techniques (e.g. Direction-Of-Arrival/Direction-Of-Departure (DoA/DoD) positioning techniques based on antenna arrays) are suitable. In outdoor street canyons or indoor office-like environments, Dead Reckoning (DR) may be applied for positioning. DR is understood in this specification as a process of estimating a current position based upon a previously determined position (a so-called fix), and advancing that position based upon known or estimated movement parameters (such as for instance speed over elapsed time or step length times step frequency, and course/direction).

Inter alia, it may however be difficult to decide when to apply these different positioning techniques. Inter alia, it may also be difficult to provide reliable input (such as for instance a position estimate or movement parameters such as for instance movement directions or step lengths) for positioning techniques, such as for instance DR techniques.

In a first aspect of the present invention, a method is disclosed, comprising the steps of appended claim 1.

In this first aspect of the present invention, furthermore a computer program is disclosed, comprising program code for performing the method according to the first aspect of the present invention when said computer program is executed on a processor. The computer program may for instance be distributable via a network, such as for instance the Internet. The computer program may for instance be storable or encodable in a computer-readable medium. Said computer program may for instance at least partially represent software and/or firmware of said processor. Said processor may for instance be comprised in said device at which said magnetic signal is detected.

In this first aspect of the present invention, furthermore a computer-readable medium is disclosed, having a computer program according to the first aspect of the present invention stored thereon. The computer-readable medium may for instance be embodied as an electric, magnetic, electro-magnetic, optic or other storage medium, and may either be a removable medium or a medium that is fixedly installed in an apparatus or device. Non-limiting examples of such a computer-readable medium are a Random-Access Memory (RAM) or a Read-Only Memory (ROM). The computer-readable medium may for instance be a tangible medium, for instance a tangible storage medium. A computer-readable medium is understood to be readable by a computer, such as for instance a processor. Said processor may for instance be comprised in said device at which said magnetic signal is detected.

In this first aspect of the present invention, furthermore an apparatus is disclosed, as defined in appended claim 13. Said apparatus may for instance be said device, or a part thereof.

In this first aspect of the present invention, furthermore an apparatus is disclosed, comprising at least one processor; and at least one memory including computer program code as defined in claim 12. Said computer program code may for instance at least partially represent software and/or firmware for said processor. Non-limiting examples of said memory are a RAM or ROM that is accessible by said processor. Said apparatus may for instance be said device, or a part thereof. According to the first aspect of the present invention, a magnetic signal is detected at a device. Said device may for instance be a positioning device that is configured to determine its position. Said determined position may then be indicated to a user of said device, or provided to another apparatus for further processing. An example of said device is a hand-held electronic device, for instance a mobile phone, or a mobile navigation unit.

Said magnetic signal may for instance comprise a magnitude and/or a direction of a magnetic flux density or of a magnetic field strength. Said magnetic signal may for instance be a sinusoidal signal. As a further example, said magnetic signal may be a signal with a constant magnitude. It stems from a magnetic signal source, which may for instance be an artificial magnetic signal source (in contrast to the Earth's magnetic poles). The magnetic signal source has been installed in an environment in which said device (and thus also the user carrying said device) is to be positioned by said positioning process. A non-limiting example of such a magnetic signal source is a coil arrangement (i.e. one or more coils, for instance a pair of Helmholtz coils) driven by a current, which may for instance be a time-variant current, such as for instance a sinusoidal current, or a time-invariant current, such as for instance a constant (DC) current. Said magnetic signal source may produce said magnetic signal in a stationary or quasi-stationary manner, i.e. said magnetic signal source may not act as an antenna. This may for instance be achieved when the dimensions of the components of the magnetic signal source (for instance one or more coils) are much smaller (for instance by a factor of 10 or less) than a quarter of the wave-length of a signal that drives said magnetic signal source (such as for instance a current that drives said one or more coils). Said magnetic signal may not be accompanied by an electric signal. Said magnetic signal may not be the magnetic component of an electro-magnetic signal (such as for instance a travelling electro-magnetic wave emitted by an antenna).

Said magnetic signal may for instance only be detectable at said device in a limited area associated with said magnetic signal source, so that detection of said magnetic signal at said device is indicative of said device being located in said limited area. Therein, said magnetic signal may be considered to be only detectable at said device if it is received with at least a minimum (for instance pre-defined) signal strength or signal-to-noise ratio. Said limited area may be characteristic for the magnetic signal source used. Said area may for instance be considered to be defined by a hull outside of which the strength of said magnetic signal significantly deteriorates, for instance below a fixed (e.g. pre-defined) value. A reception sensitivity of a reception component of said device and/or a strength of said magnetic signal source may for instance be adjusted so that said magnetic signal is only detectable by said device if said device is in said limited area. Said magnetic signal may for instance only be detectable at said device if said device is positioned at or at least close to said magnetic signal source (for instance less than 1 m apart from said magnetic signal source, to name an example value). For instance, if said magnetic signal source is embodied as two coils that are mounted at opposite walls, said magnetic signal may for instance only be detectable if said device is substantially between said two coils. As a further non-limiting example, if said magnetic signal source is embodied as a coil that is mounted on the floor or on a ceiling, said magnetic signal may for instance only be detectable if said device is substantially above or below said coil, respectively.

Said magnetic signal is detected at said device, yielding a detected magnetic signal. Said detection may for instance result from a monitoring process of at least a limited duration of time.

Positioning process information is available, which is used in said positioning process. Therein, positioning process information is information on a detected magnetic signal, and/or information determined based on said detected magnetic signal, and/or identity information determined based on data measured to detect said detected magnetic signal.

Said positioning process information may for instance be the bare information that a magnetic signal has been detected at all.

As further non-limiting examples, said positioning process information may comprise a representation of said detected magnetic signal itself (for instance a sampled representation thereof).

As further non-limiting examples, the positioning process information may comprise one or more parameters or characteristics of said detected magnetic signal, for instance its frequency, modulation pattern, magnitude and/or direction, or information contained in said magnetic signal itself, for instance information that has been included (e.g. coded) into said magnetic signal. For instance, the position of the magnetic source that produced the detected magnetic signal may be included into the magnetic signal, for instance explicitly (as coordinate values, e.g. geodetic coordinates), or implicitly (for instance by assigning the magnetic signal source an identifier, e.g. a number, so that the position of the magnetic signal source can be identified based on the identifier).aid positioning process information may additionally or alternatively comprise information on a movement direction of the user of the device, which movement direction may for instance be gathered by a process that controls the activation of said magnetic signal source and may then be included into said magnetic signal.

As further non-limiting examples, said positioning process information may comprise information that is determined based on the detected magnetic signal. Therein, said information may be determined based on the detected magnetic signal alone, or also based on further information.

As further non-limiting examples, said positioning process information may comprise information that is determined based on data measured to detect said detected magnetic signal (for instance measurement data that is obtained by measuring a magnetic characteristic over a period of time to detect the magnetic signal). Therein, said information may be determined based on said measured data alone, or also based on further information, such as for instance reference data pertaining to the magnetic signal source that produced the detected magnetic signal, allowing deriving of, for instance, a movement direction and/or a step length of a user and/or allowing identification of a magnetic signal source that produced the detected magnetic signal.

Said positioning process is for positioning said device in said environment. Said positioning process may comprise one or more different positioning techniques, for instance GNSS based positioning, angle-based positioning (for instance positioning that exploits transmission and/or reception with antenna arrays with at least two antenna elements, such as for instance DoA/DoD based positioning, where either the direction of arrival and/or the direction of departure of signals respectively arriving or departing from the antenna array are determined either at the transmitting site or the receiving site), DR based positioning, beacon-based positioning (for instance a positioning in which the positions and/or coverage areas of beacons, such as for instance Wireless Local Area Network (WLAN) access points or base stations of cellular communication systems, that can currently be heard (for instance received with a minimum signal strength) at a device are considered to determine a position of the device), to name but a few non-limiting examples. Said positioning process may further use maps or other information, for instance to filter/enhance the position estimate.

Said positioning process information is used in said positioning process. Said positioning process information may for instance be used in said positioning process to determine said position of said device, either based solely on the positioning process information or based on further information. Equally well, said positioning process information may be used in said positioning process to alter a course or flow of said positioning process. Said positioning process thus may be understood to be affected by said positioning process information.

According to the first aspect of the present invention, thus positioning process information which is related to a detected magnetic signal produced by a magnetic source that is installed in an environment is used in a positioning process. Said magnetic signal source thus may be considered as a reference point in said environment that, via the magnetic signal it produces, can be exploited in the positioning process, for instance by switching between different positioning techniques comprised in the positioning process upon the detection of the magnetic signal, or by considering the position of the magnetic signal source (which may be contained in or at least be derivable from or based on said detected magnetic signal) as the current position of the device upon detection of the magnetic signal (and for instance using this position as a fix for a DR process), or by deriving/determining further parameters useable in the positioning process from the detected magnetic signal or based on data related to the detected magnetic signal, such as a movement direction and/or a step length of a user that carries said device, which may for instance be useful for a DR process, or such as an identification of the magnetic signal source that produced the detected magnetic signal.

In embodiments of the present invention, using a magnetic signal is advantageous since the magnetic signal can be detected with a magnetometer which may already be present and used in devices for heading estimation (i.e. determining the direction of magnetic north). So no new hardware (i.e. antenna) is required at the devices for detection of the magnetic signal.

In embodiments of the present invention, using a magnetic signal is advantageous since the magnitude of the magnetic signal (e.g. the magnetic field strength) attenuates rapidly as a function of distance from the magnetic signal source and therefore, the magnetic signal may only be detectable in a close vicinity of the magnetic signal source. This means that the magnetic signal source provides accurate position fixes to be used e.g. together with dead reckoning.

According to an embodiment of the first aspect of the present invention, said production of said magnetic signal by said signal source is triggered by said device or a user of said device approaching or passing said magnetic signal source. This may for instance mean that said magnetic signal is only produced when said device or user is sensed to approach or pass said magnetic signal source. Such a sensing may for instance be accomplished based on contact switches, light barriers, switches that are coupled with automatic doors, proximity sensors or signaling between the device and the magnetic signal source, to name but a few non-limiting examples. Said production of said magnetic signal may be terminated when said device or said user of said device has passed said magnetic signal source or departs from said magnetic signal source. This may also be sensed by means as listed above. Alternatively or additionally, a timer may be used to control the period during which the production of the magnetic signal is used after production has been triggered.

Triggering production of the magnetic signal by the user or device approaching or passing the magnetic signal source may be advantageous since the power consumption of the magnetic signal source can be reduced as compared to a continuous production of the magnetic signal by the magnetic signal source.

Triggering production of the magnetic signal by the user or device approaching or passing the magnetic signal source may also be advantageous since the area in which the magnetic signal is detectable at the device can be confined to a limited area or substantially a single position. Detection of the magnetic signal at the device may then be considered indicative of the device being located in this limited area or at this position. For instance, if the magnetic signal source is mounted in a corridor, a first light barrier before the magnetic signal source and a second light source behind the magnetic signal source may be used to turn on and off the production of the magnetic signal, respectively, when a user walks through the first and second light barrier. The limited area is then the area between the first and second light barrier. Equally well, in this scenario, a single light barrier at the magnetic signal source may be used, and a user passing this light barrier may then, due to the detection of the magnetic signal (the production of which is triggered by passing the light barrier) at the user's device, be considered at the position of the magnetic signal source.

Therein, the detection of the magnetic signal at the device may be considered to be independent of the way of triggering the production of the magnetic signal; in other words, the device may only have to be capable of detection of the magnetic signal, whereas the triggering of the production of the magnetic signal can be implemented in many different ways, for instance as appropriate in the respective environment in which the magnetic signal source is installed (for instance, near an automatic door, a switch coupled to the automatic door may be user to trigger production of the magnetic signal by a magnetic signal source that is located near the automatic door, whereas for a different magnetic source, for instance a light barrier or a contact switch on the floor may be used) .

According to an embodiment of the first aspect of the present invention, detecting said magnetic signal at said device is part of the method according to the first aspect of the present invention. Consequently, the apparatuses according to the first aspect of the present invention then comprise means for detecting said magnetic signal or are caused to detect said magnetic signal. Alternatively, said detecting of said magnetic signal may not be part of said method according to the first aspect of the present invention, and said apparatuses according to the first aspect of the present invention may then not comprise means for detecting or may not be caused to detect said magnetic signal. They may then for instance receive information on or from said detected magnetic signal from another apparatus. This other apparatus may for instance be a part of said device.

According to an embodiment of the first aspect of the present invention, said magnetic signal may be detected at said device by analyzing measurement data, which is obtained by measuring a magnetic characteristic (such as a magnitude and/or a direction of a magnetic flux density or of a magnetic field strength) over a period of time. Said measuring may be performed continuously, or in fixed intervals, to name but a few non-limiting examples. Said measuring may for instance be performed with a magnetometer, for instance a 3-axis magnetometer. Non-limiting examples of such a magnetometer are a Hall effect magnetometer and a fluxgate magnetometer. Functionality of said magnetometer may also be provided by a digital compass installed in said device for this and/or another purpose.

Measuring said magnetic characteristic over said period of time may be part of said method according to said first aspect of the present invention. Consequently, said apparatuses according to the first aspect of the present invention then may comprise means for measuring said magnetic characteristic or may be caused to measure said magnetic characteristic. Alternatively, said measuring may not be part of said method according to the first aspect of the present invention, and said apparatuses may then not comprise means for measuring and may not be caused to measure said magnetic characteristic. Said apparatuses may then for instance receive said measurement data from another apparatus. This other apparatus may for instance be part of said device.

According to an embodiment of the first aspect of the present invention, said data measured to detect said detected magnetic signal is measurement data obtained by measuring a magnetic characteristic over a period of time to detect said magnetic signal, and said information determined based on said data measured to detect said detected magnetic signal is a movement direction of said device that is determined based on a comparison of said measurement data and reference data related to said magnetic signal source. Said information on said movement direction may for instance be useable in said positioning process for a DR positioning technique. Said measurement data may for instance comprise said detected magnetic signal, but may comprise further data before and/or after the detected magnetic signal.

Said reference data may comprise a set of data representing a magnetic signal received when moving with respect to said magnetic signal source. Said set of data may for instance have been received when moving in a certain direction with respect to the magnetic signal source. By comparing the measurement data and the reference data (for instance by using a pattern matching algorithm), it may thus be considered that the movement direction of the device was the same as compared to the movement direction that was chosen when the reference data was determined. For different movement directions, respectively different sets of data may be comprised in said measurement data. It may also be possible that the sets of data for opposite movement directions are mirrored representations of each other, so that it may then only be necessary to have one set of data in the reference data and to consider this characteristic when comparing the measurement data with the reference data.

Said determining of said movement direction of said device may be part of said method of said first aspect of the present invention. Consequently, the apparatuses according to the first aspect of the present invention may then comprise means for determining said movement direction or may be caused to determine said movement direction. Alternatively, said determining may not be part of said method according to the first aspect of the present invention, and said apparatuses may then not comprise means for determining and may not be caused to determine said movement direction. Information on said movement direction may then be received by said apparatuses from another apparatus. This other apparatus may be part of said device or not.

According to an embodiment of the first aspect of the present invention, said data measured to detect said detected magnetic signal is measurement data obtained by measuring a magnetic characteristic over a period of time to detect said magnetic signal, and said information determined based on said data measured to detect said detected magnetic signal is a step length of a user of said device that is determined based on said measurement data and on reference data related to said magnetic signal source. Said measurement data may for instance comprise said detected magnetic signal, but may comprise further data before and/or after the detected magnetic signal. Said step length may for instance be determined based on said measurement data, said reference data and on knowledge of a distance (e.g. a length in meters) covered by said reference data, for instance by using a dynamic time warping algorithm.

Said reference data may comprise a set of data representing a magnetic signal received when moving with respect to said magnetic signal source. Said set of data may for instance be equal to said set of data (or equal to one of said sets of data) based on which said movement direction of said device is determined.

According to an embodiment of the first aspect of the present invention, said method further comprises determining said step length of said user of said device. Consequently, said apparatuses according to the first aspect of the present invention comprise means for determining said step length and are caused to determine said step length. Alternatively, said determining may not be part of said method according to the first aspect of the present invention, and said apparatuses may then not comprise means for determining said step length and may not be caused to determine said step length. Information on said step length may then for instance be received from another apparatus, which may either be a part of said device or not.

According to an embodiment of the first aspect of the present invention, said data measured to detect said detected magnetic signal is measurement data obtained by measuring a magnetic characteristic over a period of time to detect said magnetic signal, and said information determined based on said data measured to detect said detected magnetic signal is an identification of said magnetic signal source that produced said detected magnetic signal, said identification being determined based on a comparison of said measurement data and reference data related to said magnetic signal source. Said reference data may for instance be representative of characteristic magnetic anomalies in the vicinity of the magnetic signal source and thus may be suited for identification of the magnetic signal source, in particular if the magnetic signals produced by one or more magnetic signal sources installed in said environment are the same or similar and thus have to be differentiated by other means than the magnetic signals produced by them. Said comparison of said measurement data and said reference data may for instance also be used to verify an identification of a magnetic signal source (which identification may for instance have been determined without referring to the reference data).

Said reference data may for instance comprise a set of data representing a magnetic signal received when moving with respect to said magnetic signal source. Said set of data may for instance be equal to said set of data (or equal to one of said sets of data) based on which said movement direction and/or said step length is determined.

According to an embodiment of the first aspect of the present invention, said method further comprises determining said identification. Consequently, said apparatuses according to the first aspect of the present invention comprise means for determining said identification and are caused to determine said identification. Alternatively, said determining may not be part of said method according to the first aspect of the present invention, and said apparatuses may then not comprise means for determining said identification and may not be caused to determine said identification. Information on said identification may then for instance be received from another apparatus, which may either be a part of said device or not.

According to an embodiment of the first aspect of the present invention, said magnetic signal comprises a direction of a magnetic flux density or of a magnetic field strength produced by said magnetic signal source, said detected magnetic signal comprises a detected direction of said magnetic flux density or of said magnetic field strength, and said positioning process information is a movement direction of said device in said environment determined based on an estimated movement direction of said device in a sensor coordinate system relative to said detected direction in said sensor coordinate system and on knowledge on a direction of said magnetic flux density or said magnetic field strength in said environment.

Said direction of said magnetic flux density or said magnetic field strength in said environment may for instance be in a coordinate system that is also used in said positioning process. Said sensor coordinate system may for instance be a coordinate system that is used by a sensor (e.g. a magnetometer) that detects said magnetic signal (in this embodiment the detected direction). Said estimated movement direction may for instance be estimated in said sensor coordinate system based on measured acceleration data (for instance based on the principal component vector of the horizontal acceleration and knowledge of the pattern for forward and vertical acceleration), and an angle between said estimated movement direction and the detected direction in said sensor coordinate system may be determined. The determined angle may then be applied to the known direction (which may for instance be a direction in geodetic coordinates or with respect to a map) of the magnetic flux density or magnetic field strength produced by the magnetic signal source in the environment to obtain the movement direction of the device in the environment.

Said determining of said movement direction of said device may be part of said method of said first aspect of the present invention. Consequently, the apparatuses according to the first aspect of the present invention may then comprise means for determining said movement direction or may be caused to determine said movement direction. Alternatively, said determining may not be part of said method according to the first aspect of the present invention, and said apparatuses may then not comprise means for determining and may not be caused to determine said movement direction. Information on said movement direction may then be received by said apparatuses from another apparatus. This other apparatus may be part of said device or not.

According to an embodiment of the first aspect of the present invention, said positioning process information is used in said positioning process to associate said detected magnetic signal with a position of said magnetic signal source that produced said detected magnetic signal, so that a position of said device is determinable at least partially based on said position of said magnetic signal source.

For instance, if only one magnetic signal source is (known to be) installed in the environment, the magnetic signal may be necessarily associated with this single magnetic signal source and/or with the position of said magnetic signal source. If several magnetic signal sources are (known to be) installed in the environment, and if the magnetic signals produced by these magnetic signal sources are all the same (for instance all sinusoids with the same frequency), a detected magnetic signal may be associated with its producing magnetic signal source and/or the position of this magnetic signal source based on additional information, such as coarse information on a current position of the device, or a last known position of the device, for instance combined with map information. Said position of said device may then for instance be determined by assuming that - since the device is detecting the magnetic signal - the position of the device and the position of the magnetic signal source are substantially the same.

It may also be the case that at least two magnetic signal sources may be installed in said environment, that said at least two magnetic signal sources may be configured to produce different magnetic signals, respectively, and that said positioning process may be capable of differentiating between said different magnetic signals when associating said detected magnetic signal with said position of said magnetic signal source that produced said detected magnetic signal. Said magnetic signals may then for instance differ in their frequencies, and/or may be modulated differently (for instance by using Frequency Shift Keying (FSK) or any other type of modulation) . Each magnetic signal source may then for instance produce a unique magnetic signal, so that the magnetic signals may be unambiguously associated with their magnetic signal sources and their respective positions. Said positioning process may then for instance use information (such as a table) on an association of the different magnetic signals and the positions of their respective magnetic signal sources.

According to an embodiment of the first aspect of the present invention, said positioning process information is a position of said magnetic signal source and is used in said positioning process to determine a position of said device. Said position may for instance be included in said magnetic signal, for instance in encoded form. Said position may for instance be contained in said magnetic signal as coordinates of the magnetic signal source, for instance as geodetic coordinates. Said position of said device may then for instance be determined in said positioning process by assuming that the current position of the device equals the position of the magnetic signal source, since the magnetic signal was detected at the device. Said magnetic signal may also include further information, for instance on a movement direction of the device with respect to the magnetic signal source, which movement direction may for instance be determined in the process that controls the triggering of the production of the magnetic signal, and this information may then also be used in the positioning process together with the position of the magnetic signal source.

Said determined position of said device as described in the previous two embodiments may for instance serve as a starting position or position update for a dead reckoning process. In an embodiment of the first aspect of the present invention, it may thus be advantageous to install a magnetic signal source at a position in said environment at which a DR based positioning starts, for instance at an entrance of a corridor.

According to an embodiment of the first aspect of the present invention, said positioning process comprises at least two different positioning modes, and said positioning process information is used in said positioning process to trigger a switching between said at least two different positioning modes.

One of said at least two different positioning modes may for instance be based on dead reckoning. As an example, a second of the at least two different positioning modes may be an angle-based positioning or a GNSS based positioning mode.

In an embodiment of the first aspect of the present invention, it may then be advantageous to install a magnetic signal source at a boundary between two areas in which the at least two different positioning modes should respectively be used. When said device crosses said boundary from a first area to a second area, and the magnetic signal is detected, it may then be switched from the positioning mode that may be preferable in the first area to the positioning mode that may be preferable in the second area. If, in response to detection of the magnetic signal, it is switched to dead reckoning, the position of the magnetic signal source (and, if contained in or derived based on the detected magnetic signal, further information such as the movement direction of the device and/or the step length of the user) may be used in this dead reckoning process.

In a second aspect of the present invention, a method is disclosed, comprising producing, at a magnetic signal source that is installable in an environment, a magnetic signal that is detectable by a device, wherein positioning process information that is at least one of information on a detected magnetic signal, information determined based on said detected magnetic signal and identity information determined based on data measured to detect said detected magnetic signal is useable in a positioning process that is for positioning said device in said environment.

In this second aspect of the present invention, furthermore a computer program is disclosed, comprising program code for performing the method according to the second aspect of the present invention when said computer program is executed on a processor. The computer program may have the same properties that have already been described with respect to the computer program according to the first aspect of the present invention. Said processor may for instance be comprised in said magnetic signal source.

In this second aspect of the present invention, furthermore a computer-readable medium is disclosed, having a computer program according to the second aspect of the present invention stored thereon. The computer-readable medium may have the same properties that have already been described with respect to the computer-readable medium according to the second aspect of the present invention. Said processor may for instance be comprised in said magnetic signal source. In this second aspect of the present invention, furthermore an apparatus is disclosed, configured to perform the method according to the second aspect of the present invention. Said apparatus may for instance be the magnetic signal source, or a part thereof.

In this second aspect of the present invention, furthermore an apparatus is disclosed, comprising means for producing, at a magnetic signal source that is installable in an environment, a magnetic signal that is detectable at a device, wherein positioning process information that is at least one of information on a detected magnetic signal, information determined based on said detected magnetic signal and identity information determined based on data measured to detect said detected magnetic signal is useable in a positioning process that is for positioning said device in said environment. Said apparatus may for instance be said magnetic signal source, or a part thereof.

In this second aspect of the present invention, furthermore an apparatus is disclosed, comprising at least one processor; and at least one memory including computer program code, said at least one memory and said computer program code configured to, with said at least one processor, cause said apparatus at least to produce, at a magnetic signal source that is installable in an environment, a magnetic signal that is detectable by a device, wherein positioning process information that is at least one of information on a detected magnetic signal, information determined based on said detected magnetic signal and identity information determined based on data measured to detect said detected magnetic signal is useable in a positioning process that is for positioning said device in said environment. Said computer program code may for instance at least partially represent software and/or firmware for said processor. Non-limiting examples of said memory are a RAM or ROM that is accessible by said processor. Said apparatus may for instance be said magnetic signal source, or a part thereof.

According to an embodiment of the second aspect of the present invention, production of said magnetic signal is triggered by said device or a user of said device approaching or passing said magnetic signal source. Said magnetic signal may for instance only be produced if a light barrier connected to the magnetic signal source is blocked by an approaching or passing user, or if an automatic door (furnished with a switch connected to the magnetic signal source) at or near the magnetic signal source opens or closes due to an approaching/passing user, or if a pressure sensor (connected to the magnetic signal source) on a floor is activated by an approaching/passing user, to name but a few non-limiting examples.

For the second aspect of the present invention, the above description of the first aspect of the present invention and of its embodiments equally applies. In particular, all features and advantages of the first aspect of the present invention (including its embodiments) shall be understood to be disclosed in connection with the second aspect of the present invention as well.

In a third aspect of the present invention, a system is disclosed, comprising at least one magnetic signal source installed in an environment and comprising means for producing a magnetic signal; and at least one apparatus comprising means for using, in a positioning process, positioning process information that is at least one of information on a detected magnetic signal detected at a device, information determined based on said detected magnetic signal and identity information determined based on data measured to detect said detected magnetic signal, wherein said positioning process is for positioning said device in said environment.

In this third aspect of the present invention, furthermore a system is disclosed, comprising at least one magnetic signal source installed in an environment and configured to produce a magnetic signal; and at least one apparatus comprising at least one processor and at least one memory including computer program code, said at least one memory and said computer program code configured to, with said at least one processor, cause said apparatus at least to use, in a positioning process, positioning process information that is at least one of information on a detected magnetic signal detected at a device, information determined based on said detected magnetic signal and identity information determined based on data measured to detect said detected magnetic signal, wherein said positioning process is for positioning said device in said environment.

For the third aspect of the present invention, the above description of the first aspect of the present invention and of its embodiments equally applies. In particular, all features and advantages of the first aspect of the present invention (including its embodiments) shall be understood to be disclosed in connection with the third aspect of the present invention as well.

It is to be noted that the above description of the aspects of the present invention and of their embodiments is to be understood to be merely exemplary and non-limiting.

Furthermore, the embodiments described above and in particular their single features shall be understood to be disclosed in all possible combinations with each other.

These and further concepts of the invention will be apparent from and elucidated with reference to the detailed description presented hereinafter.

BRIEF DESCRIPTION OF THE FIGURES

In the figures show:

Fig. 1:    A schematic illustration of an embodiment of a system according to the present invention;

Fig. 2a:   a schematic block diagram of an embodiment of an apparatus in a device to be positioned according to the present invention;

Fig. 2b:   a schematic block diagram of a further embodiment of an apparatus in a device to be positioned according to the present invention;

Fig. 3:    a schematic illustration of an embodiment of a tangible storage medium according to the present invention;

Fig. 4a:   a flowchart of an embodiment of a method according to the present invention to be performed by the apparatus of Fig. 2a;

Fig. 4b:   a flowchart of an embodiment of a method according to the present invention to be performed by the apparatus of Fig. 2b;

Fig. 5:    a schematic block diagram of an embodiment of an apparatus in a magnetic signal source according to the present invention;

Fig. 6a:   a flowchart of an embodiment of a method according to the present invention to be performed by the apparatus of Fig. 5;

Fig. 6b:   a flowchart of a further embodiment of a method according to the present invention to be performed by the apparatus of Fig. 5;

Fig. 7:    a schematic illustration of an example of an environment in which magnetic signal sources according to the present invention have been installed to support a positioning of a device;

Fig. 8:    a schematic illustration of a set of Helmholtz coils that serve as an example of a magnetic signal source according to the present invention;

Fig. 9:    a schematic illustration of an example of measurement data containing a magnetic signal according to the present invention;

Fig. 10:   a schematic illustration of examples of measurement data and reference data pertaining to a magnetic signal produced by a magnetic signal source; and

Fig. 11:   a schematic illustration of a set-up in which a movement direction of a user/device is determined based on a detected direction of a magnetic flux density or magnetic field strength produced by a magnetic signal source.

DETAILED DESCRIPTION OF EMBODIMENTS OF THE INVENTION

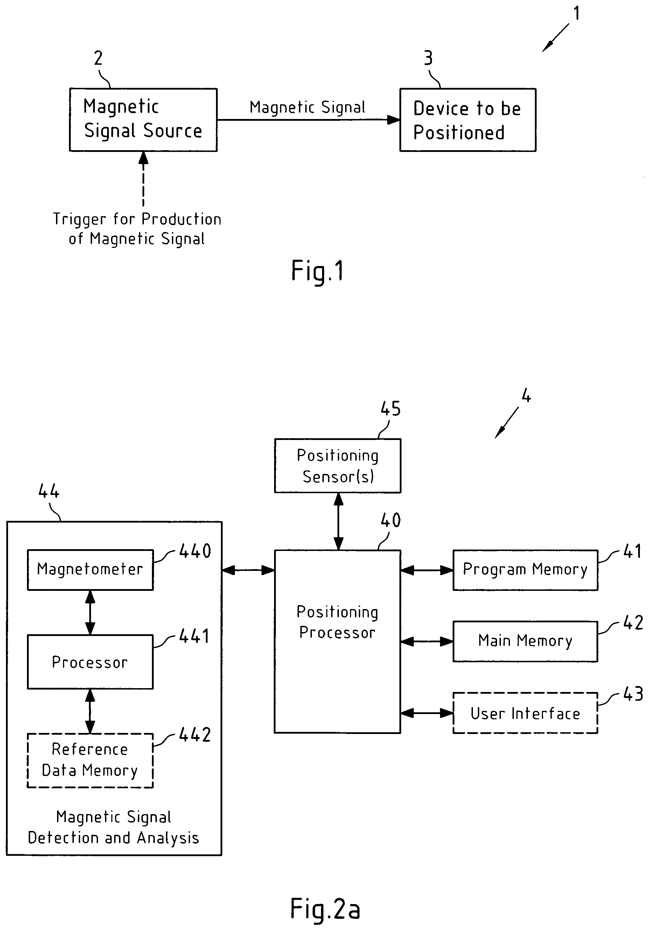

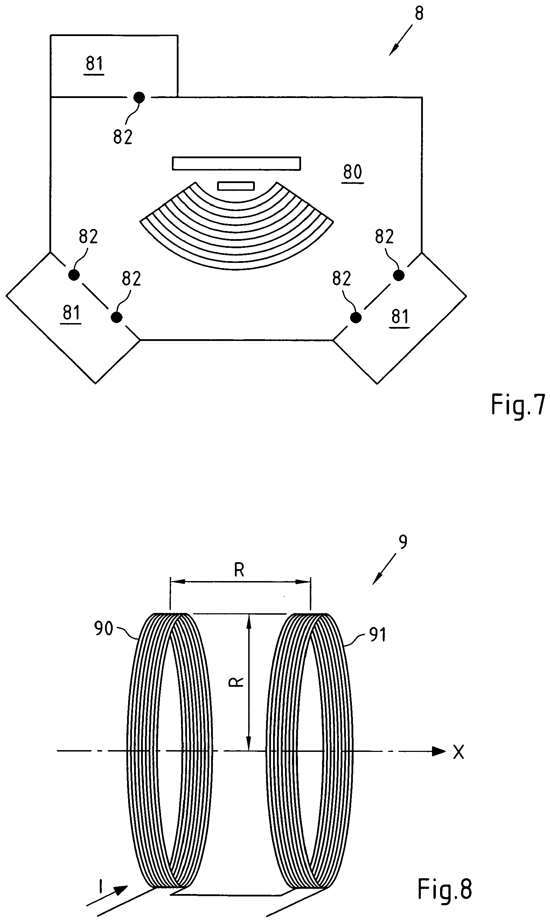

Fig. 1 is a schematic illustration of an embodiment of a system 1 according to the present invention. System 1 comprises at least one magnetic signal source 2 installed in an environment, and a device 3, which is to be positioned in said environment by a positioning process. An example of such an environment will be presented with reference to Fig. 7 below. The magnetic signal source 2 produces a magnetic signal that is detectable at said device 3, so that positioning process information can be used in said positioning process. Therein, the magnetic signal source 2 may optionally be triggered to produce the magnetic signal, for instance by said device 3, or by the user of said device 3. Alternatively, said magnetic signal source 2 may however produce said magnetic signal without being triggered, for instance in a continuous manner (once installed or turned on). The general features of magnetic signal source 2, device 3 and the magnetic signal have already been described above in the summary section. In general, the description of the embodiments in the summary section also applies to the present detailed description section.

Fig. 2a is a schematic block diagram of an embodiment of an apparatus 4 that implements device 3 of Fig. 1 or forms a component thereof (for instance a module thereof). Apparatus 4 comprises a positioning processor 40 with program memory 41 and main memory 42. Positioning processor 40 is configured to use positioning process information in a positioning process. To this end, positioning processor 40 may for instance execute a computer program that is stored in program memory 41. Main memory 42 is used by positioning processor 40 as a working memory. Positioning processor 40 is further configured to operate a positioning process that targets positioning of device 3 (see Fig. 1) in an environment. To this end, positioning processor 40 interfaces with one or more positioning sensors 45. Examples of such positioning sensors 45 are a GNSS sensor, and/or a unit for angle-based positioning (e.g. a DoA/DoD unit) and/or a DR unit. Further non-limiting examples for positioning sensor 45 are sonic/sonar, infrared or radar sensors, or a camera or a WLAN-based positioning unit. Based on information from the positioning sensors 45, positioning processor 40 conducts the positioning process to determine the position of device 3. Apparatus 4 may further comprise a user interface 43, for instance to receive commands from a user and/or to present a result of the positioning process to the user.

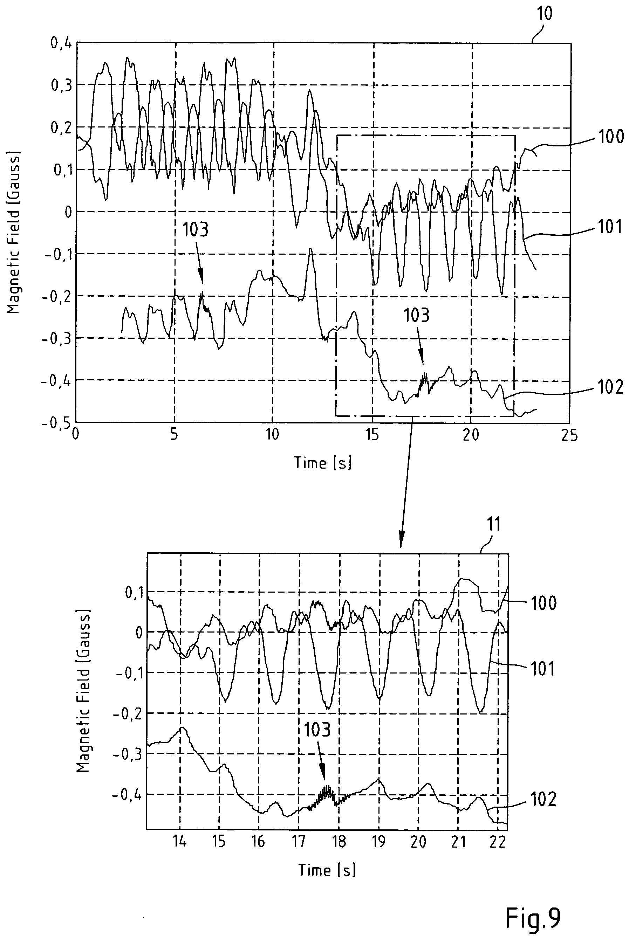

Apparatus 4 further comprises a magnetic signal detection & analysis unit 44, which interfaces with positioning processor 40. Unit 44 comprises a magnetometer 440 configured to measure a magnetic characteristic, such as for instance a magnitude and/or a direction of a magnetic flux density, over a period of time (for instance permanently or in regular or irregular intervals) to produce measurement data. This magnetometer may for instance be a 3-axis magnetometer; however, also a 2-axis or even a 1-axis magnetometer may be sufficient. Therein, deployment of a 3-axis magnetometer may for instance be advantageous if a direction of a magnetic flux density or of a magnetic field strength is to be measured. Examples of such measurement data will be presented with reference to Fig. 9 below.

This measurement data is analyzed by processor 441 of unit 44, to detect a magnetic signal produced by a magnetic signal source. This may for instance be accomplished by comparing (correlating) a known replica of the magnetic signal with the measurement data. This detection may however not necessarily have to be based on a replica of the magnetic signal. It may also be sufficient to detect a characteristic in the measurement data, such as for instance a modulation ripple or the like that is caused by the magnetic signal in the measurement data.

Processor 441 is further capable of producing positioning process information, which is then provided by unit 44 to positioning processor 40, which uses this information in the positioning process.

Generally speaking, this positioning process information comprises information on a detected magnetic signal, and/or information determined based on said detected magnetic signal and/or identity information determined based on data measured to detect said detected magnetic signal.

Such positioning process information may for instance comprise a representation of the magnetic signal itself, or information included in the magnetic signal (like for instance an identifier of the magnetic signal source that produced the magnetic signal, or a position of the magnetic signal source), information on a parameter or characteristic of the detected magnetic signal (like for instance its frequency, modulation pattern, magnitude or direction), or the bare information that a magnetic signal has been detected at all, to name but a few non-limiting examples. Optionally, unit 44 may further comprise a reference data memory 442. Therein, for instance replicas of magnetic signals to be detected may be stored as a basis for the comparison performed by processor 441.

Alternatively or in addition to the replicas of the one or more magnetic signals to be detected, reference data memory 442 may store characteristics that may be required for detection of the magnetic signal (for instance only a frequency of the ripple that is caused by the magnetic signal in the measurement data).

Processor 441 may be configured to recover/derive information included in the detected magnetic signal (this may however also be accomplished by positioning processor 40), which forms an example of positioning process information.

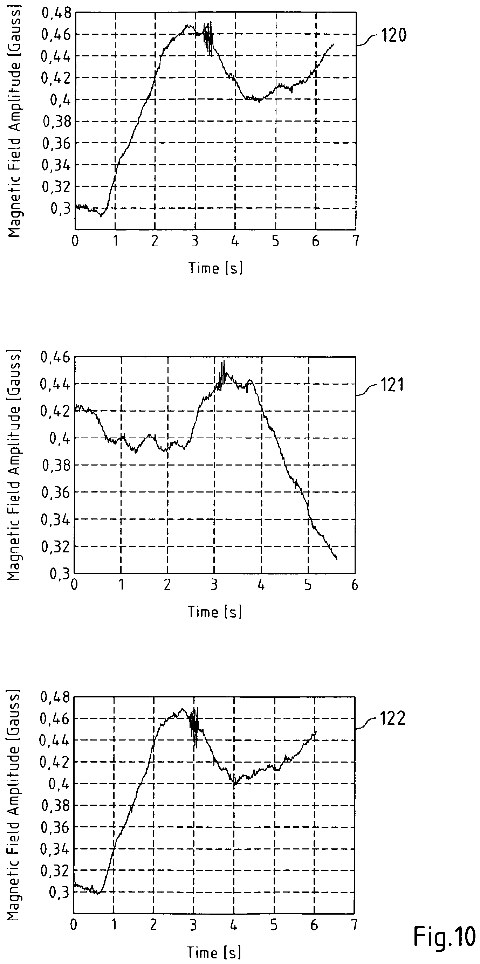

Furthermore, processor 441 may be capable of deriving, based on the measurement data obtained from magnetometer 440 and on reference data stored in reference data memory 442 and relating to one or more sets of measurement data that have been measured when moving towards the magnetic signal source, a movement direction of device 3 with respect to the magnetic signal source. Examples of such reference data will be presented with reference to Fig. 10 below. This derived movement direction may then also be provided to positioning processor 40 as positioning process information to be used in the positioning process.

Even further, processor 441 may be capable of deriving, based on the measurement data from magnetometer 440 and on reference data stored in reference data memory 442 and pertaining to measurement data that has been measured when moving towards the magnetic signal source (which may be the same reference data as the reference data used for deriving the movement direction), a step length of the user of device 3. This derived step length may then also be provided to positioning processor 40 as positioning process information to be used in the positioning process.

Processor 441 may also be capable of identifying, based on the measurement data obtained from magnetometer 440 and on reference data stored in reference data memory 442 and relating to one or more sets of measurement data that have been measured when moving towards the magnetic signal source, the magnetic signal source 2 that produced the detected magnetic signal. Examples of such reference data will be presented with reference to Fig. 10 below. An identifier for the magnetic signal source may then be provided to positioning processor 40 as positioning process information to be used in the positioning process.

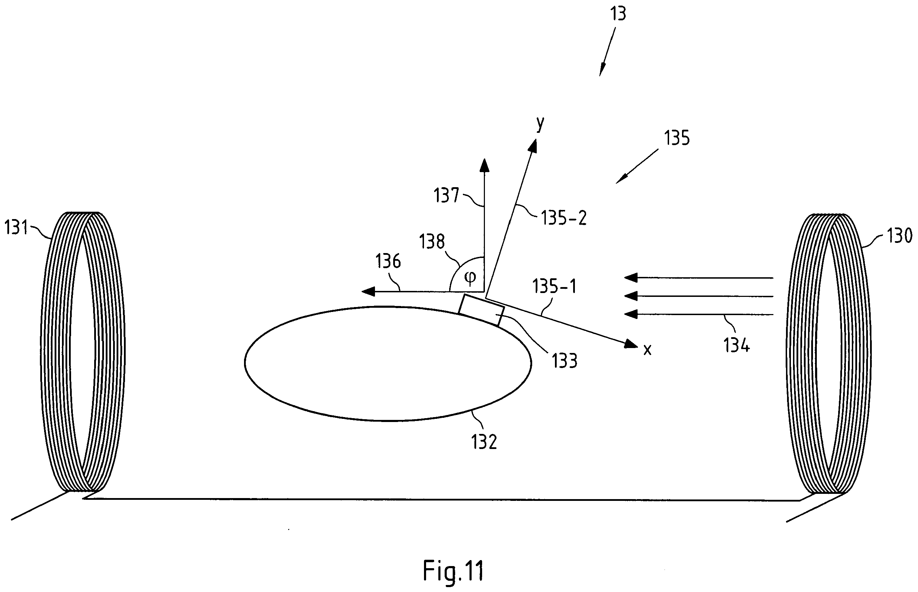

Processor 441 may also be capable of analyzing the measurement data from magnetometer 440 to determine a direction of a magnetic flux density or of a magnetic field strength of the magnetic signal produced by magnetic signal source 2 and to estimate a movement direction of device 3, both directions being related to a coordinate system used by magnetometer 440, and to use information on the direction of the magnetic flux density or of the magnetic field produced by magnetic signal source 2 in a coordinate system used by the positioning process (which is for instance related to a map of the environment in which device 3 is to be positioned) to determine a movement direction of device 3 in the coordinate system used by the positioning process. Such information may for instance be stored in reference data memory 442. Such a movement direction may then be provided to positioning processor 40 as positioning process information. A more detailed example of a technique for determining the movement direction of device 3 based on the estimated movement direction of device 3 in sensor coordinates and on the direction of the magnetic flux density or field strength produced by the magnetic signal source in the coordinate system used by magnetometer 440 and in the coordinate system used by the positioning process will be given below with reference to Fig. 11.

It is understood that processor 441 may comprise an internal or external program memory that stores program code to be executed by processor 441 to trigger processor 441 to perform its various tasks described above, and/or that processor 441 may comprise an internal or external memory for storing data, in particular measurement data obtained from magnetometer 440.

The circuitry formed by the components of apparatus 4 may be implemented in hardware alone, partially in hardware and in software, or in software only, as further described at the end of this description.

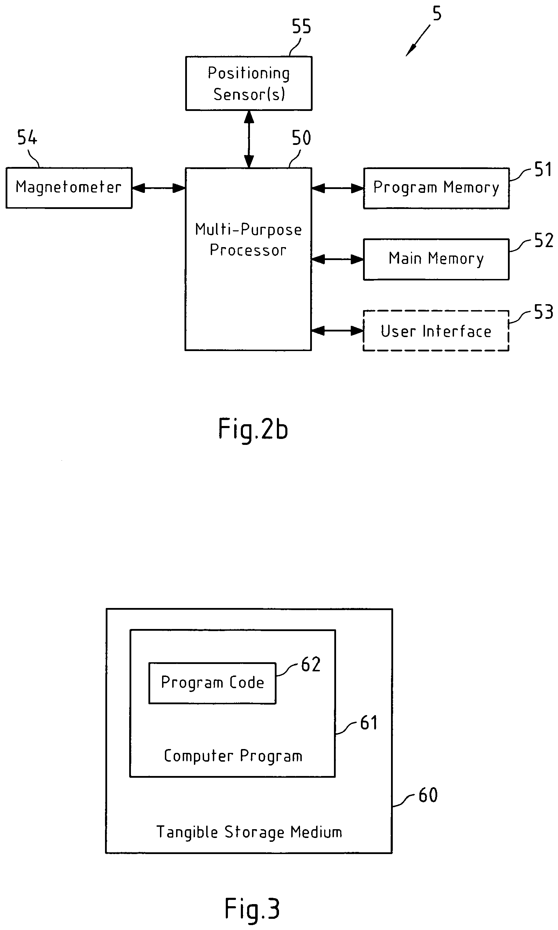

Fig. 2b is a schematic block diagram of a further embodiment of an apparatus 5 that implements device 3 of Fig. 1 or forms a component thereof (for instance a module thereof).

Apparatus 5 comprises a multi-purpose processor 50, which combines some or all of the functionality of positioning processor 40 and processor 441 of apparatus 4 of Fig. 2a. Generally speaking, multi-purpose processor 50 thus is configured to use positioning process information in a positioning process, and is further configured to detect the magnetic signal in measurement data that is provided by magnetometer 54 of apparatus 5. Multi-purpose processor 50 is further capable of determining/deriving positioning process information based on the measurement data provided by magnetometer 54, and also based on further data, such as for instance reference data that may be stored in main memory 52, which may further be used as working memory by multi-purpose processor 50, for instance for storing measurement data obtained from magnetometer 54. Equally well, there may be a dedicated reference data memory as in apparatus 4 of Fig. 2a. Multi-purpose processor 50 further interfaces with a program memory that stores program code that is executed by multi-purpose processor 50, and with one or more positioning sensors 55 that provide further information for the positioning process. Apparatus 5 may further comprise an optional user interface 53 for receiving user inputs and/or for outputting information to a user.

The circuitry formed by the components of apparatus 5 may be implemented in hardware alone, partially in hardware and in software, or in software only, as further described at the end of this description.

It is to be noted that the magnetometers in apparatuses 4 and 5 may for instance also be used for other purposes than detecting the magnetic signal produced by the magnetic signal source. For instance, these magnetometers may be used as digital compasses.

If apparatuses 4 and 5 are considered as enhancements of apparatuses or devices that already comprise magnetometers (for instance in the form of digital compasses that provide orientation by determining the direction relative to the Earth's magnetic poles), exploiting these magnetometer in the process of detecting the magnetic signal produced by the magnetic signal source may be considered to bring added value for these magnetometers.

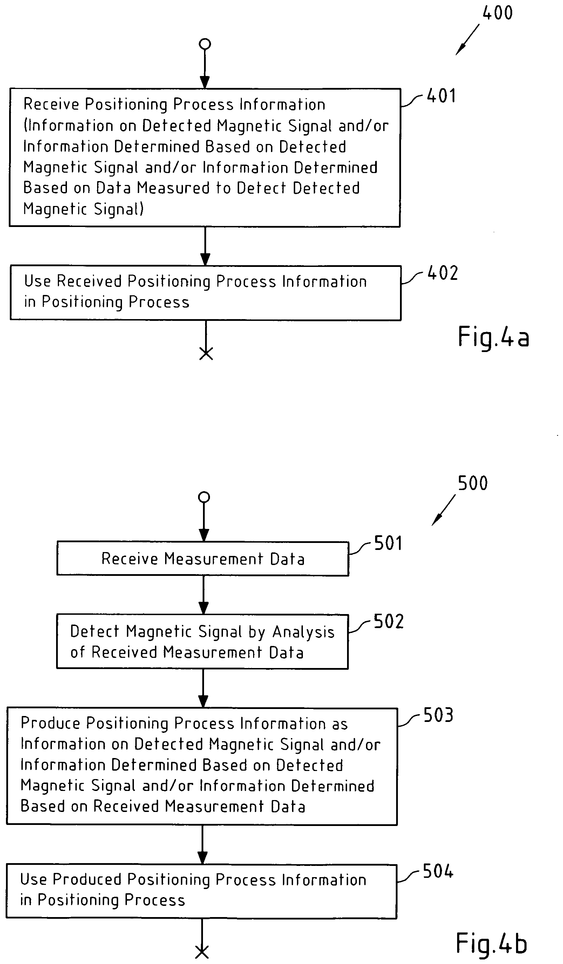

Fig. 3 is a schematic illustration of an embodiment of a tangible storage medium 60 according to the present invention. This tangible storage medium may for instance form program memory 41 of the apparatus 4 of Fig. 2a or program memory 51 of apparatus 5 of Fig. 2b. It may for instance be embodied as RAM or ROM memory, but equally well as a removable memory. Tangible storage medium 60 comprises a computer program 61, which in turn comprises program code 62. This program code may for instance implement the methods of the flowchart 400 of Fig. 4a or of the flowchart 500 of Fig. 4b that may be executed when computer program 61 is run on positioning processor 41 of apparatus 4 of Fig. 2a or on multi-purpose processor 50 of apparatus 5 of Fig. 2b. Fig. 4a is a flowchart 400 of an embodiment of a method according to the present invention. This flowchart 400 may for instance be comprised as computer program 61 in tangible storage medium 60, which may in turn represent program memory 41 of apparatus 4 of Fig. 2a, so that flowchart 400 would then be executed by positioning processor 40.

In a step 401 of flowchart 400, positioning process information is received. This positioning process information comprises information on a detected magnetic signal, and/or information determined based on a detected magnetic signal, and/or identity information determined based on data measured to detect a detected magnetic signal. With respect to apparatus 4 of Fig. 2a, this information would thus be received by positioning processor 40 from unit 44.

In a step 402, the received positioning process information is used in a positioning process. With respect to apparatus 4 of Fig. 2a, this positioning process would be performed by positioning processor 40.

Fig. 4b is a flowchart 500 of an embodiment of a method according to the present invention. This flowchart 500 may for instance be comprised as computer program 61 in tangible storage medium 60, which may in turn represent program memory 51 of apparatus 5 of Fig. 2b, so that flowchart 500 would then be executed by multi-purpose processor 50.

In a step 501 of flowchart 500, measurement data is received. With reference to apparatus 5 of Fig. 2b, this measurement data would be provided by magnetometer 54 to multi-purpose processor 50.

In a step 502, the magnetic signal is detected based on an analysis of the received measurement data. In the context of apparatus 5 of Fig. 2b, this would be performed by multi-purpose processor 50.

In a step 503, positioning process information is produced. In the context of apparatus 5 of Fig. 2b, this would also be performed by multi-purpose processor 50.

Production of the positioning process information may for instance comprise one or more of:

- Producing information on the detected magnetic signal, for instance generating an indication that a magnetic signal has been detected,

- Producing information determined based on the detected magnetic signal, for instance extracting information from the detected magnetic signal (for instance information that has been coded into the magnetic signal), or determining parameters or characteristics of the detected magnetic signal (such as for instance its frequency or its modulation scheme), or combining such extracted information or determined parameters or characteristics with further information, and

- Producing identity information determined based on data measured to detect the detected magnetic signal, for instance by comparing measurement data from a magnetometer with reference data related to a magnetic signal source to determine a movement direction and/or step length of a user and/or to identify the magnetic signal source that produced the detected magnetic signal.

In a step 504, the produced positioning process information is used in a positioning process. In the context of apparatus 5 of Fig. 2b, this would also be performed by multi-purpose processor 50.

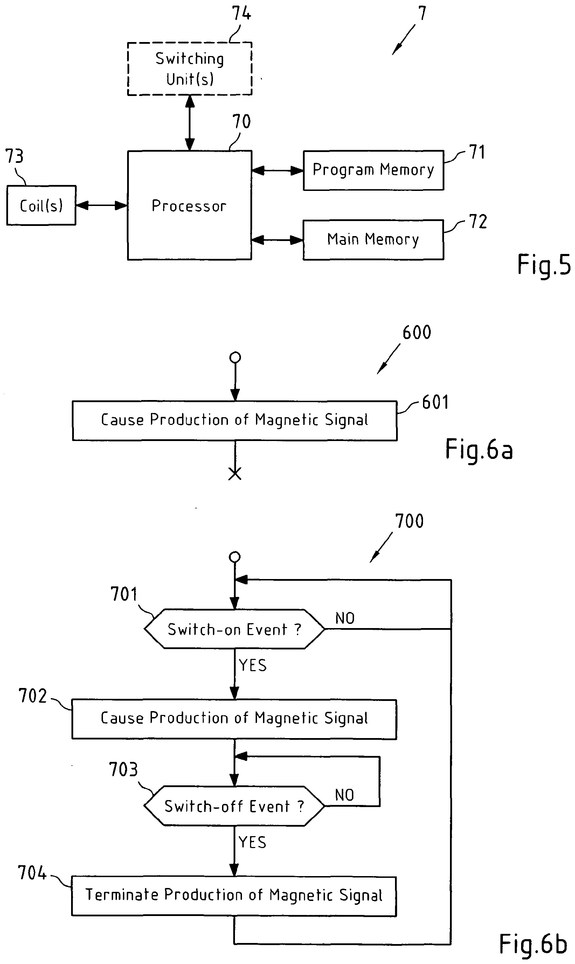

Fig. 5 is a schematic block diagram of an embodiment of an apparatus 7 according to the present invention. Apparatus 7 may either implement a magnetic signal source, or may be a component thereof. Apparatus 7 comprises a processor 70 for controlling the overall operation of apparatus 7, and in particular for controlling the production of a magnetic signal. To this end, processor 70 executes program code stored in program memory 71. This program memory 71 may for instance be embodied as the tangible storage medium 60 of Fig. 3. Processor 70 also interacts with main memory 72, which may for instance act as a working memory for processor 70. Apparatus 7 further comprises one or more coils 73 for producing a magnetic signal. A non-limiting example of such coils are a pair of Helmholtz coils, which will be discussed with reference to Fig. 8 below. Apparatus 7 may further comprise one or more optional switching units 74 that trigger, via processor 70, production of the magnetic signals. Said switching units 74 may for instance comprise contact switches, light barriers or proximity sensors, to name but a few non-limiting examples.

The circuitry formed by the components of apparatus 7 may be implemented in hardware alone, partially in hardware and in software, or in software only, as further described at the end of this description.

Fig. 6a is a flowchart 600 of an embodiment of a method according to the present invention. This flowchart 600 may for instance be implemented as computer program 61 of tangible storage medium 60 of Fig. 3, which in turn may represent program memory 71 of apparatus 7 of Fig. 5 and thus may be executed by processor 7.

In a step 601 of flowchart 600, production of a magnetic signal is caused. In the context of apparatus 7 of Fig. 5, this step is performed by processor 70. To this end, for instance a sinusoidal current may be input into coils 73 of apparatus 7 of Fig. 5 to cause production of a sinusoidal magnetic flux density.

Fig. 6b is a flowchart 700 of a further embodiment of a method according to the present invention. This flowchart 700 may for instance be implemented as computer program 61 of tangible storage medium 60 of Fig. 3, which in turn may represent program memory 71 of apparatus 7 of Fig. 5 and thus may be executed by processor 7.

In contrast to flowchart 600 of Fig. 6a, in the flowchart 700 of Fig. 6b, switching events received from switching units (such as for instance switching units 74 of apparatus 7 of Fig. 5) are used to trigger production of the magnetic signal.

In a step 701 of flowchart 700, it is checked if a switch-on event is received (in the context of Fig. 5, such switching events would be received from switching unit 74 and received by processor 70).

If this is the case, production of a magnetic signal is caused in step 702 (in the context of Fig. 5, processor 70 then causes the coils 73 to produce the magnetic signal).

Otherwise, the flowchart returns to step 701 and continues to check for received switch-on events.

After step 702, step 703 is entered, and it is checked for switch-off events (in the context of Fig. 5, such switching events would also be received from switching unit 74 and received by processor 70).

If this is the case, production of the magnetic signal is terminated in step 704. Otherwise, flowchart returns to step 703 and continues to check for received switch-off events.

An exemplary example of a switch-on event is a user entering a light barrier that is installed at the magnetic source. An exemplary example of a switch-off event is the user leaving the light barrier. The magnetic signal would then only be produced during the time when the light barrier is obstructed.

In the following, application of the present invention in the context of an indoor positioning system will be described as a non-limiting example. It should however be noted that the present invention is equally well applicable in outdoor positioning or in mixed outdoor/indoor scenarios.

As an example, it is set out from a hybrid indoor positioning system that deploys a positioning process that is based on absolute positioning as well as relative positioning. As examples for absolute positioning, angle-based positioning (such as DoA/DoD positioning based on one or more antenna arrays) as well as positioning based on one or more installed magnetic signal sources is used, and as an example of relative positioning, a DR process is used. This DR process may for instance be based on input from one or more of an accelerometer, a magnetometer, a gyrosensor and a barometer. Optionally, the positioning process may also deploy maps for filtering of position estimates and/or for sensitivity checking. As an example, in map-based filtering, building plan information (like for instance information on the location of walls, doors, corridors) is used to constrain user motion. For instance, after getting one position fix (e.g. using a magnetic gate), the user location can be propagated using inertial sensors (for instance by DR). The path (that is for instance estimated by DR) can be furthermore corrected by knowing the possible walk paths limited by geometrical constraints of the building. Furthermore, beacon-based positioning (i.e. positioning that is based on combination of information on positions and/or coverage areas of beacons that currently can be heard) may be exploited for location and database filtering. An example of this beacon-based positioning is WiFi positioning, where WiFi beacons are used, but equally well, also beacons of cellular communication systems or a combination of WiFi and cellular beacons could be used. Such beacon-based positioning can for instance be exploited for location and datatbase filtering by using knowledge on beacon locations and/or their coverage areas to limit the user location. For instance, if it is known that certain beacons can only be detected in certain parts of a building, identical signals or signal schemes could be used by multiple magnetic gates that reside in the same building, but in different parts (for instance different wings) of the building. So beacons (and their coverage areas) would define a specific part of a building, and detection of a signal of a magnetic gate in this part of the building would furthermore give accurate location fix within that part of the building.

Accordingly, Fig. 7 is a schematic illustration of an example of an indoor environment 8 in which such a hybrid positioning system can be deployed. The indoor environment comprises a large lecture hall 80, in which angle-based positioning works quite well, and a couple of adjacent corridors 81, where angle-based positioning does not work well, since the signals from the ceiling-mounted antenna arrays are obstructed. In these corridors 81, thus DR positioning is preferred. An example of angle-based positioning that may be applied here is direction of departure (DoD) positioning, where the device 3 acts as receiving unit that estimates the direction of departure of the signals transmitted from an antenna array that may for instance be mounted at a ceiling of lecture hall 80 (for instance to assure line-of-sight propagation towards the device 3). The signals from the multiple antenna elements of this antenna array are not sent at the same time instant, but switched sequentially. The device 3 then knows the order in which the antenna elements have sent the signals, and - using knowledge on the antenna pattern of the antenna array - the direction of departure of the signals transmitted from the antenna array can be obtained. Based on this and on knowledge on the position of the antenna array, the position of the device 3 can be calculated at device 3.

Inter alia to provide initial fixes for the DR based positioning (for instance more accurate fixes than could be provided by angle-based positioning), and/or to allow estimation of parameters such as a movement direction and/or a user's step length useable for the DR based positioning and/or to switch from angle-based positioning to DR based positioning, a couple of magnetic signal sources 82 have been mounted at the transitions between lecture hall 80 and corridors 81. In the present embodiment, the magnetic signal sources 82 are embodied as so-called magnetic gates 82, which are, as an example, embodied as pairs of coils. The magnetic gates 82 are installed at the transitions in a way that the two coils are installed at opposing walls of a transition. For instance, if the transition is a door frame, one coil is installed at the left side of the door frame, and the other coil is installed at the right side of the door frame.

Fig. 8 is a schematic illustration of a set of Helmholtz coils 9 that serve as an example of a magnetic gate 82 installed in the environment 8 of Fig. 7.

The set of Helmholtz coils 9 comprises two coils 90 and 91, respectively, which are fed with the same current I (in the same sense of direction in each of the coils 90 and 91, as shown in Fig. 8). In the present example, current I is a sine wave with a frequency of 40 Hz, to name but an example. Each coil 90 and 91 has a radius R, wherein the spacing between both coils 90 and 91 is also chosen to be equal to R. This has the effect that the magnetic flux density caused by the current flowing through the coils 90 and 91 is substantially uniform between the two coils 90 and 91. In Fig. 8, this magnetic flux density is, at least within the cylinder spanned around the x-axis by the radius R, parallel to the x-axis.

The magnitude of the magnetic flux density in the center region (near the x-axis) of the midplane between both coils 90 and 91 is then given as:

$$ B = \left(\frac{4}{5}\right)^{3/2} \frac{\mu_0 n I}{R}, $$

Wherein $\mu_0$ is the permeability constant (1.26 $\times$ 10[-6] T m/A) and n is the number of turns of each coil 90 and 91.

It should however be noted that uniformity of the magnetic flux density between the two coils is not mandatory for the present invention to work. Also non-uniform magnetic flux densities allow the magnetic signal to be detectable. For instance, instead of the Helmholtz coils, also a single coil driven by a sinusoidal current and mounted flat on the floor (e.g. under a doormat) could be used as a magnetic signal source.

For the Helmholtz coils 90, 91 used for the magnetic gates 82 in the transitions of environment 8 of Fig. 7, a radius (and distance) of R=0.2 m was used. Since the frequency of the sinusoidal current I flowing through the Helmholtz coils 90, 91 was chosen to be 40 Hz, it is noted that the wavelength associated with the 40 Hz frequency is $\lambda=7.5 \times 10^6$ m, i.e. the dimensions (R=0.2 m) of the Helmholtz coils are very small compared to the wavelength $\lambda$, so that the Helmholtz coils 90, 91 do not act as an antenna. The magnetic field produces by the Helmholtz coils 90, 91 can thus be considered as a quasi-stationary field.

To finally obtain a magnetic gate 82 as deployed in the environment 8 of Fig. 7, the Helmholtz coils 90, 91 are further furnished with a microcontroller (corresponding to processor 70 of apparatus 7 of Fig. 5, e.g. Microchip PIC 16F690 flash-based 8-bit CMOS microcontroller), a power supply (e.g. a 4.5 V dry-cell battery), and a power amplifier (e.g. National Semiconductor LM4861 audio power amplifier with shutdown mode). The latter three components together can be considered to form the coils unit 73 of the apparatus 5 of Fig. 7. Furthermore, as switching unit (see unit 74 of apparatus 5 of Fig. 7), a light barrier is used, which is implemented by an infrared emitting diode positioned in the centre of coil 90 (e.g. Wishay TSAL6200 940 nm infrared diode) and an infrared receiver module (e.g. Wishay TSOP4838 IR receiver module) positioned in the centre of coil 91, so that the infrared emitting diode and the infrared receiver module face each other and form a light barrier. When this light barrier is interrupted, for instance by a user of the device passing the transition at which the magnetic gate 82 is mounted, the microcontroller then triggers production of the magnetic field by feeding a current into coils 90, 91 (see step 702 of the flowchart 700 of Fig. 6b). When the light barrier is no longer obstructed, production of the magnetic field is terminated (see step 704 of the flowchart 700 of Fig. 6b) . In the present embodiment, with the sinusoidal magnetic signal having a frequency of 40 Hz, the period of the magnetic signal is 25 ms. As long as the device/user is passing the light barrier slowly, detection of a single period of the magnetic signal at the device 3 is possible. If the speed of passing the light barrier increases so that the obstruction time of the light barrier is below 25 ms, proper detection of the magnetic signal at the device 3 may no longer possible. To combat this, the frequency of the magnetic signal may be increased, or the radius of the coils 90, 91 may be increased, or the mechanism that switched the production of the magnetic signal on and off may be modified, for instance by using two light barriers before and behind the magnetic gate 82 with a sufficiently large spacing to allow several periods of the magnetic signal to be produced even when the user/device quickly passes the magnetic gate 82.

Returning to the example of an environment 8 of Fig. 7, the magnetic gates 82 and the magnetic signals produced by them may be used in the positioning process (see step 402 of the flowchart 400 of Fig. 4a and step 505 of the flowchart of Fig. 4b) in different ways. For instance, the following non-limiting set of use-cases may be imagined:

**Use-case A: Switching between positioning modes**

Upon detection of a magnetic signal, the positioning mode is switched from angle-based positioning to DR or vice versa. In embodiments of the present invention, use of magnetic gates 82 to switch the positioning mode from angle-based positioning to DR may prevent the system from suffering from erroneous angle-based positioning estimates that may occur when trying to utilize angle-based positioning outside its area of operation.

For instance, if a user of the device 3 (see Fig. 1) is moving from area 80 of environment 8 (see Fig. 7) in one of the areas 81, production of the magnetic signal by one of the magnetic gates 82 is triggered by the user. The magnetic signal is then detected at the device 3 and triggers switching from the angle-based positioning mode to the DR positioning mode. If he/she returns to area 80, production of the magnetic signal is again triggered, and detection of the magnetic signal causes a switch back to the angle-based positioning mode. When switching from angle-based positioning to DR, the last position determined by angle-based positioning may then be used as a fix for the DR process (and of course further information if available from the angle-based positioning, such as a movement direction or a step length).

For this switching between positioning modes, it may for instance be sufficient that all magnetic gates produce the same magnetic signal (for instance a sinus with the same frequency), since differentiation of different magnetic gates 82 or their positions is not necessarily required. It may then not be required to provide environment-specific information to the positioning process, the only information required for the positioning process may then be the characteristics (e.g. the frequency) of the magnetic signals used, which characteristics may however be pre-defined and the same in several different environments.

The positioning process information o to be used in step 402 of the flowchart 400 of Fig. 4a and in step 504 of flowchart 500 of Fig. 4b may then for instance be the bare information that a magnetic signal has been detected at all (i.e. without any further information on this magnetic signal).

**Use-case B: Deriving a position of the device**

Positioning process information related to the detected magnetic signal is exploited to determine a position of the device.

In one embodiment, the position of the magnetic gate 82 that produced the magnetic signal detected at the device 3 is included in the detected magnetic signal and then is considered as the current position of the device 3. The positioning process information to be used in step 402 of the flowchart 400 of Fig. 4a and in step 504 of flowchart 500 of Fig. 4b may then for instance be the position of the magnetic gate 82 only.

Also further information could of course be included into the magnetic signal, for instance information on a movement direction of the user/device (such information may for instance be available if two light barriers are used to switch on/off the production of the magnetic signal, with one light barrier being located before the magnetic gate and one behind the magnetic gate, so that a sequence of obstruction of the light barriers is indicative of the movement direction of the user/device).

If the bandwidth of the magnetic signal is not sufficient to explicitly carry the position of the magnetic gate 82 (the frequency bandwidth may for instance be limited by the sampling frequency of the magnetometer and also by the frequency of the movement of the device/user), at least an identifier (e.g. a number) of the magnetic gate 82 may be included into the respectively produced magnetic signal (for instance by modulation), or different signal characteristics may be used to represent different magnetic gates 82 (for instance different frequencies, amplitudes and/or phases, to name but a few non-limiting examples). When detecting the magnetic signal, or after its detection, it is then attempted to associate the detected magnetic signal with the position of the magnetic gate 82 that produced the magnetic signal, and this position is then considered as the current position of the device 3. Therein, the detected magnetic signal may be associated with the position of the magnetic gate 82 directly (for instance by using a look-up table for environment 8 that lists the different types of magnetic signals (or the magnetic signals with the different identifiers) and their associated magnetic gate positions) or via the magnetic gate 82 (for instance by using a look-up table for environment 8 that associates the different types of magnetic signals (or the magnetic signals with the different identifiers) and their associated magnetic gates 82 and a map that then allows to determine the position of the magnetic gates 82).

A further method to differentiate magnetic gates is to exploit the location-dependent magnetic anomalies in the vicinity of the magnetic gates. Measurement data gathered to detect a magnetic signal is then compared to sets of reference data that have been measured when walking towards different magnetic gates, respectively. When a magnetic signal has been detected, the associated measurement data (for instance measurement data of a time window of fixed duration that includes the detected magnetic signal) is compared against all (or a subset) of the sets of reference data to determine the best match, and the magnetic gate associated with this best matching set of reference data is considered to have produced the detected magnetic signal. This approach may allow using the same magnetic signal by some or all magnetic gates.

The positioning process information to be used in step 402 of the flowchart 400 of Fig. 4a and in step 504 of flowchart 500 of Fig. 4b may then for instance be the information on characteristics of the detected magnetic signal (e.g. its frequency, if different magnetic gates 82 are differentiated by different frequencies of their magnetic signals) or on the identifier included therein (if different magnetic gates 82 are differentiated by different identifiers in their respective magnetic signals) or on an magnetic gate identifier determined based on comparing measurement data against reference data.

The position of the device 3 determined according to use-case B may then for instance be used as a fix (or an update) for a DR process. Of course, use-case B can be combined with use-case A described above, but can equally well be applied solely.

**Use-case C: Using a determined movement direction in the positioning process**

The movement direction of the device (or its user) is used in the positioning process, for instance as information for a DR process. This movement direction can for instance be determined based on the data measured to detect the detected magnetic signal and on reference data related to the magnetic gate 82 that produced the detected magnetic signal. Alternatively, this movement direction can for instance be determined based on a detected direction of the magnetic flux density or field strength of the magnetic gate and an estimated movement direction of the device, both in the coordinate system of the magnetometer, and a known direction of the magnetic flux density or field strength in the coordinate system used by the positioning process.

Use-case C can of course be combined with any of use-cases A and B (or both) described above, but can equally well be applied solely.

**Use-case D: Using a determined step length in the positioning process**

The user's step length determined based on the data measured to detect the detected magnetic signal and on reference data related to the magnetic gate 82 that produced the detected magnetic signal is used in the positioning process, for instance as information for a DR process.

Use-case D can of course be combined with any of use-cases A-C (or any two or three of them) described above, but can equally well be applied solely.

In the following, the detection of the magnetic signal as performed by processor 441 of unit 44 of apparatus 4 of Fig. 2a and by multi-purpose processor 50 of apparatus 5 of Fig. 2b will be explained in more detail.

Fig. 9 is a diagram 10 with an example of data measured to detect a magnetic signal according to the present invention. Diagram 10 shows the magnetic field measured at device 3 (see Fig. 1) with a 3-axis magnetometer (see unit 440 of apparatus 4 of Fig. 2a and unit 54 of apparatus 5 of Fig. 2b) along the x-, y- and z-axis of a three-dimensional coordinate system when device 3 passes, during a period of 25 s, a magnetic gate 82 (see Fig. 7) that is embodied as described with reference to Fig. 8 above, i.e. is equipped with a light barrier that causes the magnetic gate 82 to produce a sinusoidal magnetic signal with a frequency of 40 Hz only when the light barrier is obstructed. Therein, the measurement curves are denoted by reference numeral 102 for the x-axis, 100 for the y-axis and 101 for the z-axis.

The curves 100-102 represent three vector components (x, y, z) of a 3-axis (triaxial) magnetometer. All of them exhibit a periodic pattern that is a result of changes in the magnetometer's alignment relative to the Earth's magnetic field. As a result of the walking movement, the angle between the Earth's magnetic field and the three axes of the magnetometer changes and thus, each of the magnetometer axes detects a varying magnetic field.

Moreover, also local magnetic disturbances that move along with the user carrying the device 3 cause variation to the magnetic field. During walking, the distance and angle between the source of disturbance and the magnetometer changes which causes periodic changes to the magnetic field. These changes also follow the frequency of gait cycles. Consequently, it may be advantageous that the magnetic gates 82 use frequencies that are higher than the frequencies that are caused by walking/running movement.

As can be best seen from the x-axis measurement 102, the measurement curve 102 further shows two ripples 103, which are caused by the magnetic gate 82 producing a 40 Hz sinusoidal magnetic signal twice (each time for roughly 1 s) and the magnetometer of the device 3 picking up this magnetic signal in addition to the periodic pattern described above. The second occurrence of this ripple 103 is shown in enlarged from in diagram 11, which only shows the time period from second 13 to 22. Therein, the curves and ripple are denoted with the same reference numeral as in diagram 10.

The magnetic signal can for instance be detected from the measurement curve 102, which represents the measurement data provided by the magnetometer 440 to processor 441 of apparatus 4 in Fig. 2b and by magnetometer 54 to multi-purpose processor 50 of apparatus 5 in Fig. 2b), by correlation with a replica of the magnetic signal transmitted by the magnetic gate 82, in this case a 40 Hz sinusoidal signal. Such a replica may be stored in a reference memory (such as memory 442 of apparatus 4 of Fig. 2a or main memory 52 of apparatus 5 of Fig. 2b), or may be generated on-the-fly.

An example of a process for deriving the movement direction and/or the step length of a user of device 3 (see Fig. 1) and/or for identifying a magnetic gate based on a comparison of measurement data and reference data will now be explained with reference to Fig. 10.

Fig. 10 is a set of three diagrams 120, 121 and 122 representing measurement data (magnetic field amplitude vs. time) that has been obtained by measuring a magnetic signal produced by a magnetic gate 82 (see Fig. 7) when walking towards this magnetic gate 82, wherein the magnetic gate 82 is embodied here as described with reference to Fig. 8 above, i.e. is equipped with a light barrier that causes the magnetic gate 82 to produce a sinusoidal magnetic signal with a frequency of 40 Hz only when the light barrier is obstructed.

Therein, diagrams 121 and 122 represent reference measurements (only with respect to one axis) that have been performed with respect to a specific magnetic gate as a basis for later comparison and have been stored in a reference memory (such as memory 442 of apparatus 4 of Fig. 2a or main memory 52 of apparatus 5 of Fig. 2b), for instance together with the respective movement direction and optionally further parameters such as an identification of the magnetic gate and/or the position of the magnetic gate and/or information on the magnetic signal produced by the magnetic gate (e.g. its frequency or modulation scheme) and/or information on the length to which the reference measurement pertains.

Diagram 121 represents a measurement that has been performed when walking towards a gate 82 in a first direction, and diagram 122 represents a measurement that has been performed when walking towards the same gate 82 in the opposite direction. These reference measurements can then be compared to an actual measurement, here as an example represented by diagram 120, and by comparison of the measurements of diagram 120 and the measurements of both diagrams 121 and 122 (e.g. by a pattern matching algorithm), it can be verified that the measurement of diagram 120 more closely resembles the measurement of diagram 122, so that it can be concluded that the movement direction to be determined is the same as the movement direction of the measurement of diagram 122.

This approach is based on the insight that magnetic distortions or anomalies that are caused by metallic structures, e.g. wires etc. around the magnetic gate are location-dependent (rather than time-dependent) and have sufficient variability around the magnetic gate, so that they differ when a magnetic gate 82 is approached or passed form different directions (even when the gate 82 is not producing the magnetic signal at all). Therein, the reference measurements may for instance be performed when installing the gate.

As can be seen from diagrams 121 and 122, walking towards a magnetic gate 82 from opposite directions results in according diagrams that are substantially mirrored versions of each other. It thus may be sufficient to measure reference data only with respect to one walking direction per gate, and to produce the reference data for the opposite walking direction electronically or to use only one set of reference data when comparing the actually measured data against the reference data and to consider the mirror-effect in this comparison. For instance, pattern matching may be used to analyze whether the detected anomalies in the actually measured data (that comprises the detected magnetic signal) correspond to the reference measurement directly (this means that user is walking to the same direction as the person who collected the reference measurement). Otherwise, the anomalies in the actually measured data should correspond to the mirrored version of the reference measurement (i.e. the user is walking in the opposite direction compared to the person who collected the reference measurement).

The comparison of measurement data comprising an actually detected magnetic signal and the reference data may either be performed in a way that first the magnetic gate 82 that produced the detected magnetic signal is determined (for instance based on characteristics of the magnetic signal, such as for instance its frequency, if different frequencies are used to differentiate between different magnetic gates 82, or based on an identifier comprised in the magnetic signal), and then comparing the detected magnetic signal with the reference data that is available for this magnetic gate 82. Equally well, a detected magnetic signal may be directly compared with the reference data of all magnetic gates 82. This may however be computationally more expensive. If the length of the reference measurement is known (for instance stored together with the reference data), a pattern matching approach can be used in a similar fashion to calibrate the user's step length for the traversed distance. To this end, in addition to the measured reference data for a magnetic gate (and the further information such as the walking direction during the reference measurement, etc.), the length of the collected measurement is stored as well, e.g. in meters. The reference data could then for instance represent a path starting at a pre-defined distance (e.g. 5 meters) before the gate and ending at a pre-defined distance (e.g. 5 meters) after the gate.

Since the length of the reference measurement in meters around the gate is known exactly, the step length of the person passing by the gate can be determined by analyzing the 'Doppler shift' between the actually measured signal and the reference signal when knowing the step occurrences (i.e. how many steps a user took when walking the path from the pre-defined distance before the gate to the pre-defined distance behind the gate).

For example, a dynamic time warping algorithm may be used to determine the user's step length. Dynamic time warping is an algorithm for measuring a similarity between two sequences which may vary in time or speed.

To be able to compare the measurement data from the magnetometer to the reference data, a signal buffer may be required to at least temporarily store the latest data history. The size of such a buffer depends on the sampling frequencies of the magnetometer as well as on the length of the reference measurements around the magnetic gates.

Since it doesn't make sense to collect data when the user/device remains static, buffering of data could be controlled so that data is only buffered when the user/device is detected to be moving. This may for instance be accomplished by step detection.

A comparison of the measurement data and the reference data may also be used to identify a magnetic gate, or to verify an identification of a magnetic gate that has already been identified otherwise. If identification of a magnetic gate is targeted, it may of course be necessary to compare the measurement data against all available sets of reference data (which may be gate-specific and movement-direction-specific). The magnetic gate associated with the reference data that best matches the measurement data is then identified to have produced the detected magnetic signal, and as a side product, also the associated movement direction is obtained.

As reference data for the identification of a magnetic gate, either several sets of data pertaining to measurements performed with respective different movement directions towards this gate, or only one set of data pertaining to a measurement with one movement direction towards this gate may be provided, whereas in the latter case, for instance movement-direction-dependent symetries may be exploited (for instance the fact that, if only two opposite movement directions are possible, such as for instance in a narrow floor, the two associated sets of reference data are mirrored versions of each other).

From the significant fluctuations of the magnetic field amplitude in diagrams 120-122 of Fig. 10, which also exist if the magnetic gate 82 is not switched on at all, it can be concluded that at least theoretically, location-dependent magnetic anomalies could be used alone (i.e. without using magnetic gates) to identify/verify a magnetic gate and/or to estimate a movement direction and/or step length. However, collecting a database of magnetic anomalies and assigning reference locations for this data may be a highly burdensome task, in particular if a whole building should be covered. Also if there are neither an initial guess nor additional position fixes for the user location, the positioning process may become computationally highly inefficient, since the magnetometer data would have to be compared to a database of magnetic anomalies for a big part of the building. Moreover, some buildings may simply have less distinctive anomalies and therefore the whole process may lack accuracy.

In some embodiments of the present invention, detection of magnetic signals produced by magnetic gates thus forms a prerequisite for further analysis of measurement data that exploits location-dependent anomalies only in the vicinity of the magnetic gates, such as for instance the estimation of the movement direction and/or step length or the identification of the magnetic gate described above. In other words, in these embodiments, the magnetic gates provide accurate and reliable position fixes, and utilization of magnetic anomalies forms a supplementary method, for instance to identify the gate and/or to estimate the movement direction and/or step length. Collecting magnetic field data around the gates is then a whole lot easier task than collecting data from an entire building.

Fig. 11 schematically illustrates a set-up 13 in which a movement direction of the user/device can be determined based on the detected magnetic signal in case that the detected magnetic signal comprises a direction of a magnetic flux density or magnetic field strength produced by a magnetic gate.

In Fig. 11, a user 132 (shown from above) is passing a magnetic gate that is formed by a pair of coils 130 and 131 and produces a magnetic flux density (or magnetic field strength) 134. The user is equipped with a device 133 that is to be positioned, and which comprises a magnetometer that uses a coordinate system 135, with x-axis 135-1 and y-axis 135-2 (for the sake of simplicity of presentation, only a two-dimensional coordinate system is shown here, whereas in practice, also a three-dimensional coordinate system could be applied) . This coordinate system 135 will be denoted as "sensor coordinate system" in the following.

Device 133 is considered to be mounted on the pelvis of user 132, or placed in one of his/her pockets, for example.

As will be described in more detail below, device 133 is capable of estimating a movement direction of the user/device, which movement direction is indicated by arrow 137. This movement direction is however only available in the sensor coordinate system 135, which is decoupled from the coordinate system of the environment in which user 132 is to be positioned and which is used by the positioning process. This latter coordinate system will be termed "positioning coordinate system" in the following.

Device 133 is also capable of detecting at least the direction 136 of the magnetic flux density 134 produced by the coils 130 and 131, also in the sensor coordinate system 135, and to determine the angle $\varphi$ 138 between the estimated movement direction 137 and the detected direction 134 of the magnetic flux density.

Now, if the direction of the magnetic flux density 134 is known in the positioning coordinate system, the estimated movement direction of the user/device can be transferred from the sensor coordinate system 135 to the positioning coordinate system by applying the angle $\varphi$ 138 accordingly. This can be accomplished by storing the direction of the magnetic flux density 134 in the positioning coordinate system, for instance together with further information on the magnetic gate (such as for instance a position or identifier of the magnetic gate).

In other words, if the set-up of the gate is known, for instance relative to a map of the environment in which positioning is to be performed (e.g. a building floor plan), also the movement direction of the user/device versus the same map can be determined.

An approach to estimate the movement direction 137 of a user/device in the sensor coordinate system 135 can be derived from publication "Personal Positioning based on Walking Locomotion Analysis with Self-Contained Sensors and Wearable Camera" in Proceedings of the Second IEEE and ACM International Symposium on Mixed and Augmented Reality, 2003, Oct. 7-10, 2003, pages 103- 112.

According to this publication, a movement direction 137 in the sensor coordinate system 135 can be estimated based on the principal component vector of the horizontal acceleration and knowledge of the pattern for forward and vertical acceleration.

In more detail, gravitational acceleration is first removed from the total acceleration vector for all the samples collected within each step. After this, vertical linear acceleration can be calculated by projecting the total linear acceleration along the direction of gravitation. Horizontal acceleration is then given as the total linear acceleration minus the vertical linear acceleration. By applying Principal Component Analysis (PCA) to the time series (horizontal acceleration data during each step), the forward/backward direction can be estimated. Based on human gait analysis, the positive peak for forward acceleration is located at the middle of the sharply increasing slope of vertical acceleration. Thus, forward direction can be distinguished from backward direction by testing whether the slope of vertical acceleration at the peak for forward acceleration is increasing.

In practice, PCA for horizontal acceleration may not reveal the forward/backward direction accurately, especially if the magnetometer (sensor) is not attached on the sagittal plane of the user. However, if the magnetic gate is placed at a narrow corridor, the user has practically only two possible movement directions. For this scenario, the above-described approach may well be enough to determine the direction of movement.

As used in this application, the term 'circuitry' refers to all of the following:

(a) hardware-only circuit implementations (such as implementations in only analog and/or digital circuitry) and
(b) combinations of circuits and software (and/or firmware), such as (as applicable):

(i) to a combination of processor(s) or
(ii) to portions of processor(s)/software (including digital signal processor(s)), software, and memory(ies) that work together to cause an apparatus, such as a mobile phone or a positioning device, to perform various functions) and

(c) to circuits, such as a microprocessor (s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a positioning device.

The invention has been described above by means of embodiments, which shall be understood to be non-limiting examples. In particular, it should be noted that there are alternative ways and variations of implementing the invention which are obvious to a skilled person in the art and can be implemented without deviating from the scope of the appended claims. It should also be understood that the sequence of all method steps presented above is not mandatory, also alternative sequences may be possible.

**Claims**

1. A method comprising:

   - using, in a positioning process, positioning process information that is at least one of information on a detected magnetic signal, information determined based an said detected magnetic signal and identity information determined based on data measured to detect said detected magnetic signal, said identity information identifying a magnetic signal source,
   wherein said detected magnetic signal is produced by the magnetic signal source installed in an environment and detected at a device,
   wherein said positioning process is for positioning said device in said environment, and
   wherein said positioning process information used in the positioning process is at least said identity information and said identity information is used in said positioning process to trigger a switching between at least two different positioning modes.

2. The method according to claim 1, further comprising detecting said magnetic signal at said device.

3. The method according to any of the claims 1 or 2, wherein said data measured to detect said detected magnetic signal is measurement data obtained by measuring a magnetic characteristic over a period of time to detect said magnetic signal, and wherein said information determined based on said data measured to detect said detected magnetic signal is a movement direction of said device that is determined based on a comparison of said measurement data and reference data related to said magnetic signal source.

4. The method according to any of the claims 1-3, wherein said data measured to detect said detected magnetic signal is measurement data obtained by measuring a magnetic characteristic over a period of time to detect said magnetic signal, and wherein said information determined based on said data measured to detect said detected magnetic signal is an identification of said magnetic signal source that produced said detected magnetic signal, said identification being determined based on a comparison of said measurement data and reference data related to said magnetic signal source.

5. The method according to claim 4, further comprising determining said identification.

6. The method according to any of the claims 1-5, wherein said magnetic signal comprises a direction of a magnetic flux density or of a magnetic field strength produced by said magnetic signal source, wherein said detected magnetic signal comprises a detected direction of said magnetic flux density or of said magnetic field strength, and wherein said positioning process information is a movement direction of said device in said environment determined based on an estimated movement direction of said device in a sensor coordinate system relative to said detected direction in said sensor coordinate system and an knowledge on an absolute direction of said magnetic flux density or said magnetic field strength in said environment.

7. The method according to claim 6, further comprising determining said movement direction of said device in said environment.

8. The method according to any of the claims 1-7, wherein said positioning process information is used in said positioning process to associate said detected magnetic signal with a position of said magnetic signal source that produced said detected magnetic signal, so that a position of said device is determinable at least partially based an said position of said magnetic signal source.

9. The method according to claim 8, wherein at least two magnetic signal sources are installed in said environment, wherein said at least two magnetic signal sources are configured to produce different magnetic signals, respectively, and wherein said positioning process is capable of differentiating between said different magnetic signals when associating said detected magnetic signal with said position of said magnetic signal source that produced said detected magnetic signal, wherein said magnetic signal comprises a magnitude and/or a direction of a magnetic flux density or of a magnetic field strength.

10. The method according to any of the claims 1-9, wherein one of said at least two different positioning modes is based on dead reckoning, and/or one of the at least two different positioning modes is angle-based positioning or a GNSS based positioning mode.

11. The method according to any of the claims 1-10, wherein said magnetic signal source comprises a pair of Helmholtz coils.

12. A computer program comprising:

    - program code for performing the method according to at least one of the claims 1-11, when said computer program is executed on a processor.

13. An apparatus comprising:

    - means for using, in a positioning process, positioning process information that is at least one of information on a detected magnetic signal, information determined based on said detected magnetic signal and identity information determined based on data measured to detect said detected magnetic signal, said identity information identifying a magnetic signal source, wherein said detected magnetic signal is produced by the magnetic signal source installed in an environment and detected at a device, wherein said positioning process is for positioning said device in said environment, and wherein said positioning process information used in the positioning process is at least said identity information and said
    identity information is used in said positioning process to trigger a switching between at least two different positioning modes.

14. The apparatus according to claim 13, further configured to perform the method of at least one of the claims 2-11.

15. A system comprising:

    - at least one apparatus according to any of the claims 13 or 14, and
    - at least one magnetic signal source installed in the environment and comprising means for producing the magnetic signal.

**Patentansprüche**

1. Verfahren, das Folgendes umfasst:

    Verwenden in einem Positioniervorgang von Positioniervorgangsinformationen, die Informationen über ein detektiertes magnetisches Signal, Informationen, die auf der Grundlage des detektierten magnetischen Signals bestimmt werden, und/oder Identitätsinformationen, die auf der Grundlage von Daten, die gemessen werden, um das detektierte magnetische Signal zu detektieren, bestimmt werden, wobei die Identitätsinformationen eine magnetische Signalquelle identifizieren, wobei
    das detektierte magnetische Signal durch die magnetische Signalquelle, die in einer Umgebung installiert ist, erzeugt wird und bei einer Einrichtung detektiert wird, wobei der Positioniervorgang zum Positionieren der Einrichtung in der Umgebung ausgelegt ist und
    die Positioniervorgangsinformationen, die im Positioniervorgang verwendet werden, mindestens die Identitätsinformationen sind und die Identitätsinformationen im Positioniervorgang verwendet werden, um ein Umschalten zwischen mindestens zwei verschiedenen Positioniermodi auszulösen.

2. Verfahren nach Anspruch 1, das ferner das Detektieren des magnetischen Signals bei der Einrichtung umfasst.

3. Verfahren nach einem der Ansprüche 1 oder 2, wobei die Daten, die gemessen werden, um das detektierte magnetische Signal zu detektieren, Messdaten sind, die durch Messen einer magnetischen Eigenschaft über einen Zeitraum erhalten werden, um das magnetische Signal zu detektieren, und die Informationen, die auf der Grundlage der Daten, die gemessen werden, um das detektierte magnetische Signal zu detektieren, bestimmt werden, eine Bewegungsrichtung der Einrichtung, die auf der Grundlage eines Vergleichs der Messdaten und Bezugsdaten, die mit der magnetischen Signalquelle in Beziehung stehen, bestimmt wird, ist.

4. Verfahren nach einem der Ansprüche 1-3, wobei die Daten, die gemessen werden, um das detektierte magnetische Signal zu detektieren, Messdaten sind, die durch Messen einer magnetischen Eigenschaft über einen Zeitraum erhalten werden, um das magnetische Signal zu detektieren, und die Informationen, die auf der Grundlage der Daten, die gemessen werden, um das detektierte magnetische Signal zu detektieren, bestimmt werden, eine Kennung der magnetischen Signalquelle, die das detektierte magnetische Signal erzeugt hat, ist, wobei die Kennung auf der Grundlage eines Vergleichs der Messdaten und Bezugsdaten, die mit der magnetischen Signalquelle in Beziehung stehen, bestimmt wird.

5. Verfahren nach Anspruch 4, das ferner das Bestimmen der Kennung umfasst.

6. Verfahren nach einem der Ansprüche 1-5, wobei das magnetische Signal eine Richtung einer magnetischen Flussdichte oder einer magnetischen Feldstärke, die durch die magnetische Signalquelle erzeugt wird, enthält, wobei das detektierte magnetische Signal eine detektierte Richtung der magnetischen Flussdichte oder der magnetischen Feldstärke enthält und die Positioniervorgangsinformationen eine Bewegungsrichtung der Einrichtung in der Umgebung, die auf der Grundlage einer geschätzten Bewegungsrichtung der Einrichtung in einem Sensorkoordinatensystem bestimmt wird, und ein Wissen über eine absolute Richtung der magnetischen Flussdichte oder der magnetischen Feldstärke in der Umgebung sind.

7. Verfahren nach Anspruch 6, das ferner das Bestimmen der Bewegungsrichtung der Einrichtung in der Umgebung umfasst.

8. Verfahren nach einem der Ansprüche 1-7, wobei die Positioniervorgangsinformationen im Positioniervorgang verwendet werden, um das detektierte magnetische Signal einer Position der magnetischen Signalquelle, die das detektierte magnetische Signal erzeugt hat, zuzuordnen, derart, dass eine Position der Einrichtung mindestens teilweise auf der Grundlage der Position der magnetischen Signalquelle bestimmbar ist.

9. Verfahren nach Anspruch 8, wobei mindestens zwei magnetische Signalquellen in der Umgebung installiert sind, wobei die mindestens zwei magnetischen Signalquellen jeweils konfiguriert sind, verschiedene magnetische Signale zu erzeugen, und der Positioniervorgang zwischen den verschiedenen magnetischen Signalen unterscheiden kann, wenn das detektierte magnetische Signal der Position der magnetischen Signalquelle, die das detektierte magnetische Signal erzeugt hat, zugeordnet wird, wobei das magnetische Signal einen Betrag und/oder eine Richtung einer magnetischen Flussdichte oder einer magnetischen Feldstärke enthält.

10. Verfahren nach einem der Ansprüche 1-9, wobei einer der mindestens zwei verschiedenen Positioniermodi auf Koppelnavigation basiert und/oder einer der mindestens zwei verschiedenen Positioniermodi eine winkelbasierte Positionierung oder ein GNSSbasierter Positioniermodus ist.

11. Verfahren nach einem der Ansprüche 1-10, wobei die magnetische Signalquelle ein Paar Helmholtz-Spulen enthält.

12. Computerprogramm, das Folgendes enthält:

Programmcode, um das Verfahren nach mindestens einem der Ansprüche 1-11 durchzuführen, wenn das Computerprogramm auf einem Prozessor ausgeführt wird.

13. Vorrichtung, die Folgendes enthält:

ein Mittel zum Verwenden in einem Positioniervorgang von Positioniervorgangsinformationen, die Informationen über ein detektiertes magnetisches Signal, Informationen, die auf der Grundlage des detektierten magnetischen Signals bestimmt werden, und/oder Identitätsinformationen, die auf der Grundlage von Daten, die gemessen werden, um das detektierte magnetische Signal zu detektieren, bestimmt werden, wobei die Identitätsinformationen eine magnetische Signalquelle identifizieren, wobei das detektierte magnetische Signal durch die magnetische Signalquelle, die in einer Umgebung installiert ist, erzeugt wird und bei einer Einrichtung detektiert wird, wobei der Positioniervorgang zum Positionieren der Einrichtung in der Umgebung ausgelegt ist und die Positioniervorgangsinformationen, die im Positioniervorgang verwendet werden, mindestens die Identitätsinformationen sind und die Identitätsinformationen im Positioniervorgang verwendet werden, um ein Umschalten zwischen mindestens zwei verschiedenen Positioniermodi auszulösen.

14. Vorrichtung nach Anspruch 13, die ferner konfiguriert ist, das Verfahren nach mindestens einem der Ansprüche 2-11 durchzuführen.

15. System, das Folgendes umfasst:

- mindestens eine Vorrichtung nach einem der Ansprüche 13 oder 14 und
- mindestens eine magnetische Signalquelle, die in der Umgebung installiert ist und ein Mittel zum Erzeugen des magnetischen Signals umfasst.

**Revendications**

1. Procédé, comprenant :

- l'utilisation, dans un processus de positionnement, d'une information de processus de positionnement qui est au moins l'une parmi une information sur un signal magnétique détecté, une information déterminée sur la base dudit signal magnétique détecté et une information d'identité déterminée sur la base de données mesurées pour détecter ledit signal magnétique détecté, ladite information d'identité identifiant une source de signal magnétique,

dans lequel ledit signal magnétique détecté est produit par la source de signal magnétique installée dans un environnement et détecté sur un dispositif, dans lequel ledit processus de positionnement est destiné à positionner ledit dispositif dans ledit environnement, et

dans lequel lesdites informations de processus de positionnement utilisées dans le processus de positionnement sont au moins lesdites informations d'identité, et lesdites informations d'identité sont utilisées dans ledit processus de positionnement pour déclencher une commutation entre au moins deux modes de positionnement différents.

2. Procédé selon la revendication 1, comprenant en outre la détection dudit signal magnétique sur ledit dispositif.

3. Procédé selon l'une quelconque des revendications 1 ou 2, dans lequel lesdites données mesurées pour détecter ledit signal magnétique détecté sont des données de mesure obtenues en mesurant une caractéristique magnétique pendant une période de temps pour détecter ledit signal magnétique, et dans lequel ladite information déterminée sur la base desdites données mesurées pour détecter ledit signal magnétique détecté est une direction de mouvement dudit dispositif qui est déterminée sur la base d'une comparaison desdites données de mesure et de données de référence concernant ladite source de signal magnétique.

4. Procédé selon l'une quelconque des revendications 1 à 3, dans lequel lesdites données mesurées pour détecter ledit signal magnétique détecté sont des données de mesure obtenues en mesurant une caractéristique magnétique pendant une période de temps pour détecter ledit signal magnétique, et dans lequel ladite information déterminée sur la base desdites données mesurées pour détecter ledit signal magnétique détecté est une identification de ladite source de signal magnétique qui a produit ledit signal magnétique détecté, ladite identification étant déterminée sur la base d'une comparaison desdites données de mesure et de données de référence concernant ladite source de signal magnétique.

5. Procédé selon la revendication 4, comprenant en outre la détermination de ladite identification.

6. Procédé selon l'une quelconque des revendications 1 à 5, dans lequel ledit signal magnétique comprend une direction d'une densité de flux magnétique ou d'une force de champ magnétique produite par ladite source de signal magnétique, dans lequel ledit signal magnétique détecté comprend une direction détectée de ladite densité de flux magnétique ou de ladite force de champ magnétique, et dans lequel ladite information de processus de positionnement est une direction de mouvement dudit dispositif dans ledit environnement déterminée sur la base d'une direction de mouvement estimée dudit dispositif dans un système de coordonnées de capteur par rapport à ladite direction détectée dans ledit système de coordonnées de capteur et d'une connaissance d'une direction absolue de ladite densité de flux magnétique ou de ladite force de champ magnétique dans ledit environnement.

7. Procédé selon la revendication 6, comprenant en outre la détermination de ladite direction de mouvement dudit dispositif dans ledit environnement.

8. Procédé selon l'une quelconque des revendications 1 à 7, dans lequel ladite information de processus de positionnement est utilisée dans ledit processus de positionnement pour associer ledit signal magnétique détecté à une position de ladite source de signal magnétique qui a produit ledit signal magnétique détecté, de sorte qu'une position dudit dispositif peut être déterminée au moins en partie sur la base de ladite position de ladite source de signal magnétique.

9. Procédé selon la revendication 8, dans lequel au moins deux sources de signaux magnétiques sont installées dans ledit environnement, dans lequel lesdites au moins deux sources de signaux magnétiques sont configurées pour produire respectivement différents signaux magnétiques, et dans lequel ledit processus de positionnement est capable de faire la différence entre lesdits signaux magnétiques différents lorsqu'il associe ledit signal magnétique détecté à ladite position de ladite source de signal magnétique qui a produit ledit signal magnétique détecté, dans lequel ledit signal magnétique comprend une grandeur et/ou une direction d'une densité de flux magnétique ou d'une force de champ magnétique.

10. Procédé selon l'une quelconque des revendications 1 à 9, dans lequel l'un desdits au moins deux modes de positionnement différents est basé sur la navigation à l'estime, et/ou l'un des au moins deux modes de positionnement différents est un positionnement basé sur la mesure d'angles ou un mode de positionnement basé sur le GNSS.

11. Procédé selon l'une quelconque des revendications 1 à 10, dans lequel ladite source de signal magnétique comprend une paire de bobines de Helmholtz.

12. Programme informatique, comprenant :

- un code programme pour effectuer le procédé selon au moins l'une quelconque des revendications 1 à 11, lorsque le programme informatique est exécuté sur un processeur.

13. Appareil, comprenant :

- des moyens pour utiliser, dans un processus de positionnement, une information de processus de positionnement qui est au moins l'une parmi une information sur un signal magnétique détecté, une information déterminée sur la base dudit signal magnétique détecté et une information d'identité déterminée sur la base de données mesurées pour détecter ledit signal magnétique détecté, ladite information d'identité identifiant une source de signal magnétique

dans lequel ledit signal magnétique détecté est produit par la source de signal magnétique installée dans un environnement et détecté sur un dispositif, dans lequel ledit processus de positionnement est destiné à positionner ledit dispositif dans ledit environnement, et
dans lequel ladite information de processus de positionnement utilisée dans le processus de positionnement est au moins ladite information d'identité, et ladite information d'identité est utilisée dans ledit processus de positionnement pour déclencher une commutation entre au moins deux modes de positionnement différents.

14. Appareil selon la revendication 13, configuré en outre pour effectuer le procédé selon au moins l'une quelconque des revendications 2 à 11.

15. Système, comprenant :

- au moins un appareil selon l'une quelconque des revendications 13 ou 14, et
- au moins une source de signal magnétique installée dans l'environnement et comprenant des moyens pour produire le signal magnétique.

Fig.1

Fig.2a

55

5

Positioning
Sensor(s)

54

50

Magnetometer

Multi-Purpose
Processor

51

Program Memory

52

Main Memory

53

User Interface

## Fig.2b

62

Program Code

61

Computer Program

60

Tangible Storage Medium

## Fig.3

Fig.4a

Fig.4b

74

Switching
Unit(s)

7

70

73

Coil(s)

Processor

71

Program Memory

72

Main Memory

Fig.5

600

601

Cause Production of Magnetic Signal

Fig.6a

700

701

Switch-on Event ?    NO

YES

702

Cause Production of Magnetic Signal

703

Switch-off Event ?    NO

YES

704

Terminate Production of Magnetic Signal

Fig.6b

Fig.7

Fig.8

Fig.9

Fig.10

Fig.11

EP 2 504 662 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6686881 B1

**Non-patent literature cited in the description**

- Personal Positioning based on Walking Locomotion Analysis with Self-Contained Sensors and Wearable Camera. *Proceedings of the Second IEEE and ACM International Symposium on Mixed and Augmented Reality, 2003,* 07 October 2003, 103-112